# EUROPEAN PATENT APPLICATION

(11) **EP 4 607 994 A1**
(43) Date of publication of application: **27.08.2025**
(21) Application number: 23910451.6
(22) Date of filing: 25.12.2023
(51) Int. Cl.: H04W 24/02, H04W 8/08

(54) **INFORMATION TRANSMISSION METHOD AND APPARATUS, AND RELATED DEVICE AND STORAGE MEDIUM**

(30) Priority: 30.12.2022 CN 202211738845
(71) Applicant: CHINA MOBILE COMMUNICATION CO., LTD RESEARCH INSTITUTE, Beijing 100053 (CN); CHINA MOBILE COMMUNICATIONS GROUP CO., LTD., Beijing 100032 (CN)
(72) Inventor: CHEN, Chao, Beijing 100032 (CN); LI, Aihua, Beijing 100032 (CN)
(74) Representative: Patentgruppen A/S
(86) International application number: PCT/CN2023/141403
(87) International publication number: WO 2024/140525

(57) **Abstract**

Information transmission methods, information transmission apparatuses, an NWDAF, an SMF and storage media are provided. The method includes: subscribing, by the NWDAF, to an AMF for a terminal located within an AOI to obtain a first terminal list, and sending first information to an SMF meeting a first condition, the first information being used to subscribe for user plane information about one or more terminals located within the AOI; or subscribing, by the NWDAF, to an AMF for a terminal located within an AOI to obtain a first terminal list, determining a second terminal list, and sending second information to an SMF meeting a second condition, the second information being used to subscribe for user plane information about one or more terminals located within the AOI; or sending, by the NWDAF, third information to an SMF meeting a third condition, the third information being used to subscribe for user plane information about one or more terminals located within an AOI; or sending, by the NWDAF, fourth information to an SMF meeting a fourth condition, the fourth information being used to subscribe for user plane information about one or more terminals located within an AOI.

## Description

### CROSS-REFERENCE TO RELATED APPLICATION

This application claims a priority of the Chinese patent application No. 202211738845.1 filed on December 30, 2022, which is incorporated herein by reference in its entirety.

### TECHNICAL FIELD

The present disclosure relates to the field of core network, in particular to information transmission methods, information transmission apparatuses, related devices, and storage media.

### BACKGROUND

In the related art, information exposure cases based on a User Plane Function (UPF) have been proposed. However, in a case that user plane information exposure for an Area of Interest (AOI) is achieved based on these cases, it is impossible for a NetWork Data Analytics Function (NWDAF) to accurately obtain or collect user plane information about a terminal(s) located within the AOI.

### SUMMARY

An object of the present disclosure is to provide information transmission methods, information transmission apparatuses, related devices, and storage media, so as to solve the above-mentioned problem.

The technical solutions of the present disclosure are implemented as follows.

In one aspect, the present disclosure provides in some embodiments an information transmission method, performed by an NWDAF, including: subscribing to an Access and Mobility Management Function (AMF) for a terminal located within an AOI to obtain a first terminal list, the first terminal list including at least one terminal located within the AOI; and sending first information to a Session Management Function (SMF) meeting a first condition, the first condition representing that the SMF serves at least one terminal in the first terminal list, and the first information being used to subscribe for user plane information about one or more terminals located within the AOI; or subscribing to an AMF for a terminal located within an AOI to obtain a first terminal list, the first terminal list including at least one terminal located within the AOI; determining a second terminal list, the second terminal list including at least one terminal located within the AOI, and the second terminal list being obtained or determined according to the first terminal list; and sending second information to an SMF meeting a second condition, the second condition representing that the SMF serves at least one terminal in the second terminal list, and the second information being used to subscribe for user plane information about one or more terminals located within the AOI; or sending third information to an SMF meeting a third condition, the third condition representing that the SMF serves a first Data Network Name (DNN) and/or a first network slice, and the third information being used to subscribe for user plane information about one or more terminals located within an AOI; or sending fourth information to an SMF meeting a fourth condition, the fourth condition representing that the SMF serves an AOI, and the fourth information being used to subscribe for user plane information about one or more terminals located within the AOI.

In some possible embodiments of the present disclosure, the determining the second terminal list includes: obtaining a third terminal list, the third terminal list including at least one terminal about which user plane information needs to be subscribed; and comparing terminals included in the third terminal list with terminals included in the first terminal list to determine the second terminal list.

In some possible embodiments of the present disclosure, the information transmission method further includes: sending fifth information to the AMF, the fifth information being used to subscribe for an event indicating that a terminal moves into or out of the AOI; receiving a fourth terminal list sent by the AMF, the fourth terminal list including at least one terminal moving into or out of the AOI; and updating the first terminal list with the fourth terminal list, and/or updating the second terminal list with the fourth terminal list.

In yet another aspect, the present disclosure provides in some embodiments an information transmission method, performed by an SMF, including: in a case that a first condition is met, receiving first information sent by an NWDAF, the first condition representing that the SMF serves at least one terminal in a first terminal list for the NWDAF, the first terminal list including at least one terminal located within an AOI, and the first information being used to subscribe for user plane information about one or more terminals located within the AOI; or in a case that a second condition is met, receiving second information sent by an NWDAF, the second condition representing that the SMF serves at least one terminal in a second terminal list for the NWDAF, the second terminal list including at least one terminal located within an AOI, and the second information being used to subscribe for user plane information about one or more terminals located within the AOI; or in a case that a third condition is met, receiving third information sent by an NWDAF, the third condition representing that the SMF serves a first DNN and/or a first network slice, and the third information being used to subscribe for user plane information about one or more terminals within an AOI; or in a case that a fourth condition is met, receiving fourth information sent by an NWDAF, the fourth information representing that the SMF serves an AOI, and the fourth information being used to subscribe for user plane information about one or more terminals located within the AOI.

In some possible embodiments of the present disclosure, in a case that the third information has been received, the information transmission method further includes: subscribing to an AMF for one or more terminals located within the AOI to obtain the first terminal list, the first terminal list including at least one terminal located within the AOI, and sending sixth information to a User Plane Function (UPF) meeting a fifth condition, the fifth condition representing that the UPF serves at least one terminal in the first terminal list, and the sixth information being used to subscribe for user plane information about the one or more terminals located within the AOI; or subscribing to an AMF for the one or more terminals located within the AOI to obtain the first terminal list, the first terminal list including at least one terminal located within the AOI; determining a fifth terminal list, the fifth terminal list including at least one terminal located within the AOI, the fifth terminal list being obtained or determined according to the first terminal list; and sending seventh information to a UPF meeting a sixth condition, the sixth condition representing that the UPF serves at least one terminal in the fifth terminal list, and the seventh information being used to subscribe for user plane information about the one or more terminals located within the AOI.

In some possible embodiments of the present disclosure, the third information at least includes a third terminal list, and the third terminal list includes at least one terminal about which user plane information needs to be subscribed. The determining the fifth terminal list includes: obtaining a sixth terminal list, the sixth terminal list including at least one terminal served by the SMF; and comparing terminals included in the third terminal list, terminals included in the sixth terminal list, and terminals included in the first terminal list, to determine the fifth terminal list.

In some possible embodiments of the present disclosure, the information transmission method further includes: sending eighth information to the AMF, the eighth information being used to subscribe for an event indicating a terminal moving into or out of the AOI; receiving a fourth terminal list sent by the AMF, the fourth terminal list including at least one terminal moving into or out of the AOI; and updating the first terminal list with the fourth terminal list, and/or updating the fifth terminal list with the fourth terminal list.

In some possible embodiments of the present disclosure, in a case that the fourth information has been received, the information transmission method further includes: subscribing to an AMF for the one or more terminals located within the AOI to obtain a first terminal list, the first terminal list including at least one terminal located within the AOI; for each terminal included in the first terminal list, in a case that the SMF, as an intermediate-SMF, serves the terminal, sending ninth information to an anchor-SMF of the terminal so that the anchor-SMF of the terminal subscribes to an anchor-UPF of the terminal for user plane information about the terminal, the ninth information being used to subscribe for user plane information about the terminal located within the AOI; and in a case that the SMF, as not an intermediate-SMF, serves the terminal, sending tenth information to a UPF serving the terminal, the tenth information being used to subscribe for user plane information about the terminal located within the AOI; or subscribing to an AMF for the one or more terminals located within the AOI to obtain a first terminal list, the first terminal list including at least one terminal located within the AOI; determining a seventh terminal list, the seventh terminal list including at least one terminal located within the AOI, and the seventh terminal list being obtained or determined according to the first terminal list; for each terminal included in the seventh terminal list, in a case that the SMF, as an intermediate-SMF, serves the terminal, sending eleventh information to an anchor-SMF of the terminal, such that the anchor-SMF of the terminal subscribes to an anchor-UPF of the terminal for user plane information about the terminal, the eleventh information being used to subscribe for user plane information about the terminal located within the AOI; and in a case that the SMF, as not an intermediate-SMF, serves the terminal, sending twelfth information to a UPF serving the terminal, the twelfth information being used to subscribe for user plane information about the terminal located within the AOI.

In some possible embodiments of the present disclosure, the fourth information at least includes a third terminal list, and the third terminal list includes at least one terminal about which user plane information needs to be subscribed. The determining the seventh terminal list includes: obtaining an eighth terminal list, the eighth terminal list including at least one terminal served by the SMF; and comparing terminals included in the third terminal list, terminals included in the eighth terminal list, and terminals included in the first terminal list, to determine the seventh terminal list.

In some possible embodiments of the present disclosure, the information transmission method further includes: sending thirteenth information to the AMF, the thirteenth information being used to subscribe an event indicating that a terminal moves into or out of the AOI; receiving a fourth terminal list sent by the AMF, the fourth terminal list including at least one terminal moving into or out of the AOI; and updating the first terminal list with the fourth terminal list, and/or updating the seventh terminal list with the fourth terminal list.

In some possible embodiments of the present disclosure, the first information at least includes a ninth terminal list, and the ninth terminal list includes at least one terminal in the first terminal list served by the SMF. In a case that the first information has been received, the information transmission method further includes: sending fourteenth information to a UPF meeting a seventh condition, the seventh condition representing that the UPF serves at least one terminal in the ninth terminal list, and the fourteenth information being used to subscribe for user plane information about the one or more terminals located within the AOI.

In some possible embodiments of the present disclosure, the second information at least includes a tenth terminal list, and the tenth terminal list includes at least one terminal in the second terminal list served by the SMF. In a case that the second information has been received, the information transmission method further includes: sending fifteenth information to a UPF meeting an eighth condition, the eighth condition representing that the UPF serves at least one terminal in the tenth terminal list, and the fifteenth information being used to subscribe for user plane information about the one or more terminals located within the AOI.

In yet another aspect, the present disclosure provides in some embodiments an information transmission apparatus, arranged at an NWDAF, including a first communication unit and a first processing unit. The first communication unit is configured to subscribe to an AMF for a terminal located within an AOI to obtain a first terminal list, the first terminal list including at least one terminal located within the AOI; and send first information to an SMF meeting a first condition, the first condition representing that the SMF serves at least one terminal in the first terminal list, and the first information being used to subscribe for user plane information about one or more terminals located within the AOI; or the first communication unit is configured to subscribe to an AMF for a terminal located within an AOI to obtain a first terminal list, the first terminal list including at least one terminal located within the AOI; the first processing unit is configured to determine a second terminal list, the second terminal list including at least one terminal located within the AOI, and the second terminal list being obtained or determined according to the first terminal list; and the first communication unit is further configured to send second information to an SMF meeting a second condition, the second condition representing that the SMF serves at least one terminal in the second terminal list, and the second information being used to subscribe for user plane information about one or more terminals located within the AOI; or the first communication unit is configured to send third information to an SMF meeting a third condition, the third condition representing that the SMF serves a first DNN and/or a first network slice, and the third information being used to subscribe for user plane information about one or more terminals located within an AOI; or the first communication unit is configured to send fourth information to an SMF meeting a fourth condition, the fourth condition representing that the SMF serves an AOI, and the fourth information being used to subscribe for user plane information about one or more terminals located within the AOI.

In still yet another aspect, the present disclosure provides in some embodiments an information transmission apparatus, arranged at an SMF, including a second communication unit. The second communication unit is configured to, in a case that a first condition is met, receive first information sent by an NWDAF, the first condition representing that the SMF serves at least one terminal in a first terminal list for the NWDAF, the first terminal list including at least one terminal located within an AOI, and the first information being used to subscribe for user plane information about one or more terminals located within the AOI; or the second communication unit is configured to, in a case that a second condition is met, receive second information sent by an NWDAF, the second condition representing that the SMF serves at least one terminal in a second terminal list for the NWDAF, the second terminal list including at least one terminal located within an AOI, and the second information being used to subscribe for user plane information about one or more terminals located within the AOI; or the second communication unit is configured to, in a case that a third condition is met, receive third information sent by an NWDAF, the third condition representing that the SMF serves a first DNN and/or a first network slice, and the third information being used to subscribe for user plane information about one or more terminals within an AOI; or the second communication unit is configured to, in a case that a fourth condition is met, receive fourth information sent by an NWDAF, the fourth information representing that the SMF serves an AOI, and the fourth information being used to subscribe for user plane information about one or more terminals located within the AOI.

In still yet another aspect, the present disclosure provides in some embodiments an NWDAF, including a first communication interface and a first processor. The first communication interface is configured to subscribe to an AMF for a terminal located within an AOI to obtain a first terminal list, the first terminal list including at least one terminal located within the AOI; and send first information to an SMF meeting a first condition, the first condition representing that the SMF serves at least one terminal in the first terminal list, and the first information being used to subscribe for user plane information about one or more terminals located within the AOI; or the first communication interface is configured to subscribe to an AMF for a terminal located within an AOI to obtain a first terminal list, the first terminal list including at least one terminal located within the AOI; the first processor is configured to determine a second terminal list, the second terminal list including at least one terminal located within the AOI, and the second terminal list being obtained or determined according to the first terminal list; and the first communication interface is further configured to send second information to an SMF meeting a second condition, the second condition representing that the SMF serves at least one terminal in the second terminal list, and the second information being used to subscribe for user plane information about one or more terminals located within the AOI; or the first communication interface is configured to send third information to an SMF meeting a third condition, the third condition representing that the SMF serves a first DNN and/or a first network slice, and the third information being used to subscribe for user plane information about one or more terminals located within an AOI; or the first communication interface is configured to send fourth information to an SMF meeting a fourth condition, the fourth condition representing that the SMF serves an AOI, and the fourth information being used to subscribe for user plane information about one or more terminals located within the AOI.

In still yet another aspect, the present disclosure provides in some embodiments an SMF, including a second communication interface and a second processor. The second communication interface is configured to, in a case that a first condition is met, receive first information sent by an NWDAF, the first condition representing that the SMF serves at least one terminal in a first terminal list for the NWDAF, the first terminal list including at least one terminal located within an AOI, and the first information being used to subscribe for user plane information about one or more terminals located within the AOI; or the second communication interface is configured to, in a case that a second condition is met, receive second information sent by an NWDAF, the second condition representing that the SMF serves at least one terminal in a second terminal list for the NWDAF, the second terminal list including at least one terminal located within an AOI, and the second information being used to subscribe for user plane information about one or more terminals located within the AOI; or the second communication interface is configured to, in a case that a third condition is met, receive third information sent by an NWDAF, the third condition representing that the SMF serves a first DNN and/or a first network slice, and the third information being used to subscribe for user plane information about one or more terminals within an AOI; or the second communication interface is configured to, in a case that a fourth condition is met, receive fourth information sent by an NWDAF, the fourth information representing that the SMF serves an AOI, and the fourth information being used to subscribe for user plane information about one or more terminals located within the AOI.

In still yet another aspect, the present disclosure provides in some embodiments an NWDAF, including a first processor and a first memory storing therein a computer program executed by the first processor. The first processor executes the computer program to implement the above-mentioned information transmission methods performed by the NWDAF.

In still yet another aspect, the present disclosure provides in some embodiments an SMF, including a second processor and a second memory storing therein a computer program executed by the second processor. The second processor executes the computer program to implement the above-mentioned information transmission methods performed by the SMF.

In still yet another aspect, the present disclosure provides in some embodiments a storage medium storing therein a computer program. The computer program is executed by a processor to implement the information transmission methods performed by the NWDAF or implement the information transmission methods performed by the SMF.

According to the information transmission methods, the information transmission apparatuses, the related devices and the storage media provided in various embodiments of the present disclosure, the NWDAF subscribes to the AMF for a terminal(s) located within an AOI to obtain a first terminal list, the first terminal list including at least one terminal located within the AOI; and sends first information to the SMF meeting a first condition, the first condition representing that the SMF serves at least one terminal in the first terminal list, and the first information being used to subscribe for user plane information about one or more terminals located within the AOI; or the NWDAF subscribes to the AMF for a terminal(s) located within an AOI to obtain a first terminal list, the first terminal list including at least one terminal located within the AOI; determines a second terminal list, the second terminal list including at least one terminal located within the AOI, and the second terminal list being obtained or determined according to the first terminal list; and sends second information to an SMF meeting a second condition, the second condition representing that the SMF serves at least one terminal in the second terminal list, and the second information being used to subscribe for user plane information about one or more terminals located within the AOI; or the NWDAF sends third information to an SMF meeting a third condition, the third condition representing that the SMF serves a first DNN and/or a first network slice, and the third information being used to subscribe for user plane information about one or more terminals located within an AOI; or the NWDAF sends fourth information to an SMF meeting a fourth condition, the fourth condition representing that the SMF serves an AOI, and the fourth information being used to subscribe for user plane information about one or more terminals located within the AOI. In the embodiments of the present disclosure, considering a mobility scenario for the terminal in a Session and Service Continuity (SSC) mode 1 (mode 1), i.e., considering a situation in which the terminal performs service access in an inter-SMF service area manner, the NWDAF may determine an SMF meeting a specific condition, and then subscribe to the SMF meeting the specific condition for the user plane information about one or more terminals located within the AOI.

In a case that the NWDAF subscribes to an SMF meeting the first condition for the user plane information about one or more terminals located within the AOI, the first condition represents that the SMF serves at least one terminal in the first terminal list, and the first terminal list obtained through the AMF and including at least one terminal located within the AOI necessarily includes one or more terminals that perform the service access in an inter-SMF service area manner, so the NWDAF subscribes to the SMF meeting the first condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting the second condition for the user plane information about one or more terminals located within the AOI, the second condition represents that the SMF serves at least one terminal in the second terminal list, the second terminal list including at least one terminal located within the AOI is obtained or determined according to the first terminal list, and the first terminal list obtained through the AMF necessarily includes one or more terminals that perform the service access in an inter-SMF service area manner, so the second terminal list also includes one or more terminals that perform the service access in an inter-SMF service area manner, and the NWDAF subscribes to the SMF meeting the second condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting the third condition for the user plane information about one or more terminals located within the AOI, the third condition represents that the SMF serves a first DNN and/or a first network slice, so the NWDAF subscribes to all SMFs, which serve a specific network, a specific service or a certain operator, for the user plane information about one or more terminals located within the AOI. These SMFs meeting the third condition may each subsequently obtain, through the AMF, the first terminal list including at least one terminal located within the AOI, and then subscribe to a UPF corresponding to the terminal served by the SMF itself for the user plane information about one or more terminals located within the AOI according to the first terminal list. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

In a case that the NWDAF subscribes to an SMF meeting the fourth condition for the user plane information about one or more terminals located within the AOI, the fourth condition represents that the SMF serves an AOI, so the NWDAF may subscribe to all SMFs which serve the AOI for the user plane information about one or more terminals located within the AOI. These SMFs meeting the fourth condition may each subsequently obtain, through the AMF, the first terminal list including at least one terminal located within the AOI, and then subscribe to an anchor-SMF of the terminal served by the SMF as an intermediate-SMF for the user plane information about the corresponding terminals according to the first terminal list, or subscribe to a UPF corresponding to the terminal served by the SMF, not as an intermediate-SMF, for the user plane information about one or more terminals located within the AOI. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

### BRIEF DESCRIPTION OF THE DRAWINGS

FIG. 1 is a flow chart of user plane information exposure cases for an AOI in the related art;
FIG. 2 is a schematic view showing service access in an inter-SMF service area manner in the related art;
FIG. 3 is a flow chart of an information transmission method according to an embodiment of the present disclosure;
FIG. 4 is another flow chart of the information transmission method according to an embodiment of the present disclosure;
FIG. 5 is a flow chart of a UPF data exposure scheme for an AOI according to an embodiment of the present disclosure;
FIG. 6 is a flow chart of another UPF data exposure scheme for the AOI according to an embodiment of the present disclosure;
FIG. 7 is a flow chart of yet another UPF data exposure scheme for the AOI according to an embodiment of the present disclosure;
FIG. 8 is a schematic view showing an information transmission apparatus according to an embodiment of the present disclosure;
FIG. 9 is another schematic view showing the information transmission apparatus according to an embodiment of the present disclosure;
FIG. 10 is a schematic view showing an NWDAF according to an embodiment of the present disclosure;
FIG. 11 is a schematic view showing an SMF according to an embodiment of the present disclosure; and
FIG. 12 is a schematic view showing an information transmission system according to an embodiment of the present disclosure.

### DETAILED DESCRIPTION

The present disclosure will be described hereinafter in details in conjunction with the drawings and embodiments.

Before describing the present disclosure, some terms will be explained hereinafter.

A non-intermediate-SMF refers to an SMF which serves, as an anchor-SMF, a terminal in a case that the terminal performs service access in an inter-SMF service area manner (i.e., in a mobility scenario where the terminal is in an SSC mode 1) and which serves, as a normal SMF (an SMF in a case that there is no such a concept as anchor-SMF and intermediate-SMF (I-SMF)), a terminal in a case that the terminal does not perform service access in an inter-SMF service area manner.

A non-intermediate-UPF refers to a UPF which serves, as an anchor-UPF, a terminal in a case that the terminal performs service access in an inter-SMF service area manner (i.e., in a mobility scenario where the terminal is in an SSC mode 1) and which serves, as a normal UPF (a UPF in a case that there is no such a concept as anchor-UPF and intermediate-UPF (I-UPF)), a terminal in a case that the terminal does not perform service access in an inter-SMF service area manner.

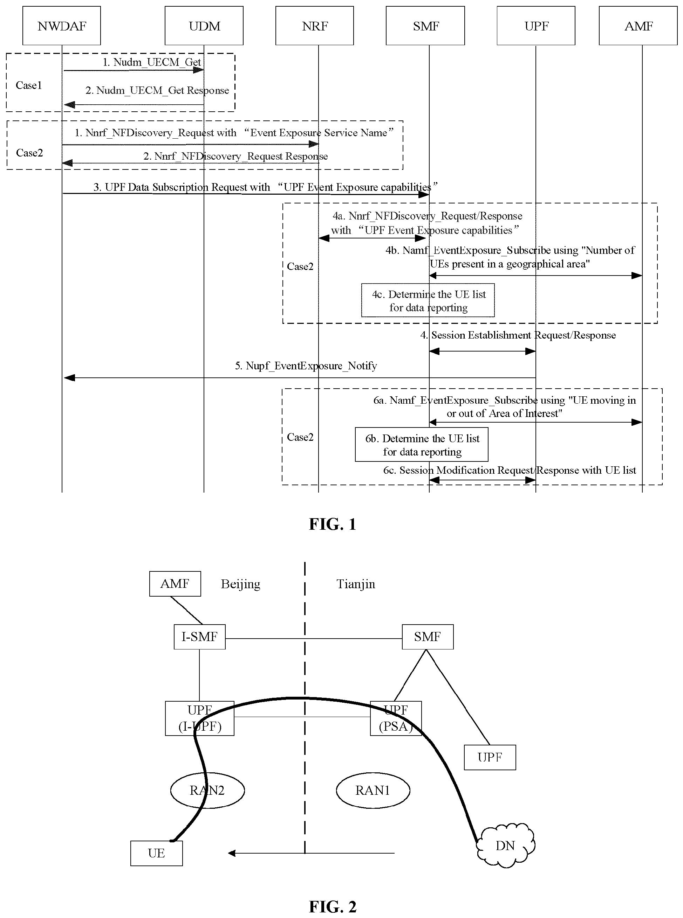

In the related art, as shown by case 2 in FIG. 1, an NWDAF searches for a corresponding SMF through an AOI, and then subscribes, through the SMF, to an AMF for existing users within the AOI and update information indicating that a user enters or leaves the AOI, so as to determine the users located within the AOI on the SMF, thereby to subscribe to a related UPF for user plane information about users within the AOI through the SMF.

However, in the above-mentioned cases, the mobility scenario where the user is in the SSC mode 1, i.e., a situation where the user performs service access in an inter-SMF service area manner, is not taken into consideration. For example, as shown in FIG. 2, in a scenario where a user in Tianjin accesses China World Trade Center in Beijing (i.e., the AOI), an anchor-SMF of the user in Tianjin is located in Tianjin, while an intermediate-SMF of the user in Tianjin is located in Beijing. In case 2 as shown in FIG. 1, the NWDAF can only subscribe to the intermediate-SMF of the user in Tianjin for user plane information. The user plane information needs to be collected by an anchor-UPF and the anchor-SMF rather than by the intermediate-UPF and the intermediate-SMF, so the NWDAF cannot subscribe to the intermediate-SMF of the user in Tianjin for the suer plane information about the user. In other words, in case 2 as shown in FIG. 1, the NWDAF can hardly obtain complete user plane information about the user located within the AOI, i.e., the NWDAF can hardly accurately obtain or collect the user plane information about the user located within the AOI.

Based on the above, in various embodiments of the present disclosure, considering the mobility scenario where a terminal is in an SSC mode 1, i.e., considering a situation where the terminal performs service access in an inter-SMF service area manner, an NWDAF determines an SMF meeting a specific condition, and then subscribes to the SMF meeting the specific condition for user plane information about one or more terminals located within an AOI.

In a case that the NWDAF subscribes to an SMF meeting a first condition for user plane information about one or more terminals located within an AOI, the first condition represents that an SMF serves at least one terminal in a first terminal list, and the first terminal list obtained through an AMF and including at least one terminal located within the AOI necessarily includes one or more terminals that perform service access in an inter-SMF service area manner, such that the NWDAF subscribes to the SMF meeting the first condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting a second condition for user plane information about one or more terminals located within an AOI, the second condition represents that the SMF serves at least one terminal in a second terminal list, the second terminal list including at least one terminal located within the AOI is obtained or determined according to a first terminal list, and the first terminal list obtained through the AMF necessarily includes one or more terminals that perform the service access in an inter-SMF service area manner, such that the second terminal list also includes one or more terminals that perform the service access in an inter-SMF service area manner, and the NWDAF subscribes to the SMF meeting the second condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting a third condition for user plane information about one or more terminals located within the AOI, the third condition represents that the SMF serves a first DNN and/or a first network slice, such that the NWDAF subscribes to all SMFs, which serve a specific network, a specific service or a certain operator, for the user plane information about one or more terminals located within the AOI. These SMFs meeting the third condition may each subsequently obtain, through the AMF, a first terminal list including at least one terminal located within the AOI, and then subscribe to a UPF corresponding to the terminal served by the SMF itself for the user plane information about one or more terminals located within the AOI according to the first terminal list. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

In a case that the NWDAF subscribes to an SMF meeting a fourth condition for user plane information about one or more terminals located within the AOI, the fourth condition represents that the SMF serves an AOI, such that the NWDAF may subscribe to all SMFs which serve the AOI for the user plane information about one or more terminals located within the AOI. These SMFs meeting the fourth condition may each subsequently obtain, through the AMF, a first terminal list including at least one terminal located within the AOI, and then subscribe to an anchor-SMF of the terminal served by the SMF as an intermediate-SMF for the user plane information about the corresponding terminals according to the first terminal list, or subscribe to a UPF corresponding to the terminal served by the SMF, not as an intermediate-SMF, for the user plane information about one or more terminals located within the AOI. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

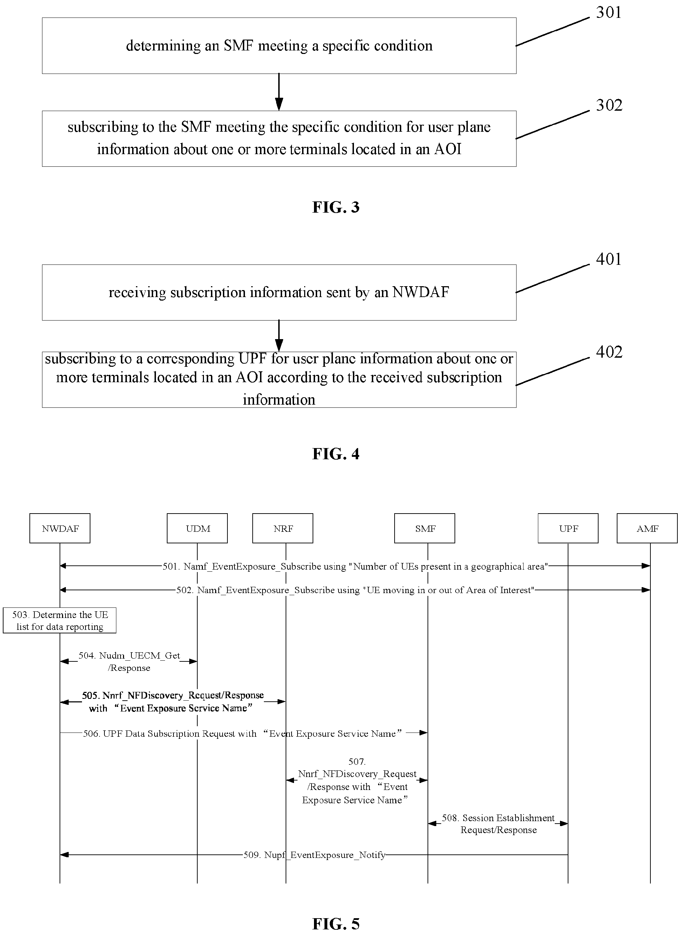

The present disclosure provides in some embodiments an information transmission method, performed by an NWDAF. As shown in FIG. 3, the information transmission method includes the following steps.

Step 301: determining an SMF meeting a specific condition.

Step 302: subscribing to the SMF meeting the specific condition for user plane information about one or more terminals located within an AOI.

In an embodiment of the present disclosure, Step 301 specifically includes: subscribing to an AMF for a terminal(s) located within an AOI to obtain a first terminal list, the first terminal list including at least one terminal located within the AOI; and determining SMFs meeting a first condition, i.e., determining at least one SMF meeting the first condition, according to the first terminal list, the first condition representing that the SMF serves at least one terminal in the first terminal list.

Correspondingly, Step 302 specifically includes sending first information to the SMF meeting the first condition (i.e., each SMF in the at least one SMF meeting the first condition), the first information being used to subscribe for user plane information about one or more terminals located within the AOI.

In actual use, the terminal may also be called as User Equipment (UE), or user.

In actual use, the user plane information includes delay, bandwidth, packet loss, etc. In addition, the user plane information is also called as user plane data, UPF information, UPF data, etc. The name of the user plane information will not be particularly defined in the embodiments of the present disclosure.

In actual use, in various embodiments of the present disclosure, processing of the NWDAF is triggered by a consumer of the NWDAF, e.g., an Application Function (AF), or a core network network function other than the NWDAF. In other words, the NWDAF receives a first request message (e.g., a first request message sent by the AF), the first request message is used to request to subscribe for (obtained or collect) the user plane information about one or more terminals located within the AOI, and the first request message at least includes relevant information about the AOI. For example, the relevant information about the AOI includes an identifier(s) of at least one Tracking Area (TA) corresponding to the AOI, or an identifier(s) of at least one cell corresponding to the AOI.

In actual use, upon the receipt of the first request message, the NWDAF subscribes to the AMF for a terminal(s) located within the AOI according to the first request message. To be specific, the NWDAF sends a second request message to the AMF, the second request message is used to subscribe for a terminal(s) located within the AOI, and the second request message at least includes relevant information about the AOI. Upon the receipt of the second request message, the AMF determines the first terminal list according to the relevant information about the AOI, and sends the first terminal list to the NWDAF. The second request message is also called as a Namf_EventExposure_Subscribe request of the AMF. The second request message is used to subscribe for a terminal(s) located within the AOI, i.e., the second request message is used to subscribe for the number of terminals present in a geographical area.

In actual use, the first condition represents that the SMF serves at least one terminal in the first terminal list, i.e., the first condition represents that the SMF, as a non-intermediate-SMF, serves at least one terminal in the first terminal list.

In actual use, it should be appreciated that, the SMF meeting the first condition further needs to have a capability of subscribing for and/or reporting the user plane information (this capability may also be understood as event exposure service), and the NWDAF determines at least one SMF meeting the first condition through a Unified Data Management (UDM) and a Network Repository Function (NRF). To be specific, with respect to each terminal in the first terminal list, the NWDAF initiates, to the UDM, a Nudm_UECM_Get request to obtain SMFs where the terminal is located (i.e., obtain SMFs which serve the terminal as non-intermediate-SMFs), and receives the SMFs returned by the UDM through a response message corresponding to the request. In addition, the NWDAF initiates, to the NRF, a Nnrf_NFDiscovery_Request message to identify SMFs which have a capability of subscribing for and/or reporting the user plane information, and the Nnrf_NFDiscovery _Request message carries therein an Event Exposure Service Name corresponding to the capability of subscribing for and/or reporting the user plane information. Then, the NWDAF obtains an intersection of the SMFs returned by the UDM and the SMFs returned by the NRF, so as to determine one or more SMFs where the terminal is located and which have the capability of subscribing or and/or reporting the user plane information, i.e., determine at least one SMF meeting the first condition.

In actual use, the first information sent to each SMF in the at least one SMF meeting the first condition at least includes a ninth terminal list, and the ninth terminal list includes at least one terminal in the first terminal list served by the SMF, i.e., the ninth terminal list includes at least one terminal in the first terminal list served by the SMF as a non-intermediate-SMF. Upon the receipt of the first information, the NWDAF subscribes to a corresponding UPF for the user plane information about one or more terminals located within the AOI according to the ninth terminal list.

In actual use, the first request message further includes a third terminal list, and the third terminal list includes at least one terminal about which user plane information needs to be subscribed. At this time, the NWDAF needs to obtain an intersection of the third terminal list and the first terminal list to obtain a second terminal list, and then subscribe to the SMF meeting the specific condition for the user plane information about one or more terminals located within the AOI according to the second terminal list.

Based on the above, in an embodiment of the present disclosure, Step 301 specifically includes: subscribing to an AMF for a terminal(s) located within an AOI to obtain a first terminal list, the first terminal list including at least one terminal located within the AOI; determining the second terminal list, the second terminal list including at least one terminal located within the AOI, the second terminal list being obtained or determined according to the first terminal list; and determining an SMF meeting a second condition, i.e., determining at least one SMF meeting the second SMF, according to the second terminal list, the second condition representing that the SMF serves at least one terminal in the second terminal list.

Correspondingly, Step 302 specifically includes sending second information to the SMF meeting the second condition (i.e., each SMF in the at least one SMF meeting the second condition), and the second information is used to subscribe for user plane information about one or more terminals located within the AOI.

The second terminal list is obtained or determined according to the first terminal list, i.e., the second terminal list is a universal set or a subset of the first terminal list.

To be specific, in an embodiment of the present disclosure, the determining the second terminal list includes: obtaining the third terminal list; and comparing terminals included in the third terminal list with terminals included in the first terminal list to determine the second terminal list, i.e., obtaining an intersection of the third terminal list and the first terminal list to obtain the second terminal list.

In actual use, upon the receipt of the first request message, the NWDAF saves the third terminal list locally, i.e., the NWDAF obtains the third terminal list from information stored locally.

In actual use, the second condition represents that the SMF serves at least one terminal in the second terminal list, i.e., the second condition represents that the SMF, as a non-intermediate-SMF, serves at least one terminal in the second terminal list.

In actual use, it should be appreciated that, the SMF meeting the second condition further needs to have a capability of subscribing for and/or reporting the user plane information, and the NWDAF determines at least one SMF meeting the second condition through a UDM and an NRF. A specific mode for determining, by the NWDAF, at least one SMF meeting the second condition through the UDM and the NRF is the same as the specific mode for determining, by the NWDAF, at least one SMF meeting the first condition through the UDM and the NRF, and thus will not be further detailed herein.

In actual use, the second information sent to each SMF in at least one SMF meeting the second condition at least includes a tenth terminal list, and the tenth terminal list includes at least one terminal in the second terminal list served by the SMF, i.e., the tenth terminal list includes at least one terminal in the second terminal list served by the SMF as a non-intermediate-SMF. Upon the receipt of the second information, the SMF subscribes to a corresponding UPF for user plane information about one or more terminals located within the AOI according to the tenth terminal list.

In actual use, the NWDAF updates (or maintains) the first terminal list and/or the second terminal list through subscribing to the AMF for an event indicating that a terminal moves into or out of the AOI.

Based on the above, in an embodiment of the present disclosure, the information transmission method further includes: sending fifth information (i.e., a Namf_EventExposure_Subscribe request) to the AMF, the fifth information being used to subscribe for the event indicating that a terminal moves into or out of the AOI; receiving a fourth terminal list sent by the AMF, the fourth terminal list including at least one terminal moving into or out of the AOI; and updating the first terminal list with the fourth terminal list, and/or updating the second terminal list with the fourth terminal list.

In a case that the first information is sent to each SMF in the at least one SMF meeting the first condition, the NWDAF updates the first terminal list with the fourth terminal list. In a case that the second information is sent to each SMF in the at least one SMF meeting the second condition, the NWDAF updates the first terminal list with the fourth terminal list and then updates the second terminal list with the third terminal list and the updated first terminal list, or the NWDAF directly updates the second terminal list with the third terminal list and the fourth terminal list.

In actual use, the SMF may subscribe to the AMF for a terminal(s) located within the AOI to obtain the first terminal list, and then subscribe to a corresponding UPF for the user plane information about one or more terminals located within the AOI according to the first terminal list. At this time, in order to prevent the user plane information about any terminal which performs the service access in an inter-SMF service area manner from being missed, the NWDAF needs to initiate the subscription to as many SMFs as possible.

Based on the above, in an embodiment of the present disclosure, Step 301 specifically includes determining one or more SMFs meeting a third condition, i.e., determining at least one SMF meeting the third condition, and the third condition represents that the SMF serves a first DNN and/or a first network slice.

Correspondingly, Step 302 specifically includes sending third information to the one or more SMFs meeting the third condition (i.e., each SMF in the at least one SMF meeting the third condition), and the third information is used to subscribe for the user plane information about one or more terminals located within the AOI.

In actual use, the first request message includes the first DNN; or the first request message includes relevant information about the first network slice, e.g., an identity (ID) of the first network slice; or the first request message includes both the first DNN and the relevant information about the first network slice.

In actual use, the SMF serves the first DNN and/or the first network slice, i.e., the SMF is an SMF serving a specific network, a specific service or a certain operator. In this way, through determining that the SMF meets the third condition, the NWDAF may subscribe to as many SMFs as possible for the user plane information about one or more terminals located within the AOI, such that the NWDAF can subsequently obtain complete user plane information about one or more terminals located within the AOI, i.e., the NWDAF can accurately obtain or collect the user plane information about one or more terminals located within the AOI.

In actual use, it should be appreciated that, the SMF meeting the third condition further needs to have a capability of subscribing for and/or reporting the user plane information, and the NWDAF determines at least one SMF meeting the third condition through the NRF. To be specific, the NWDAF initiates a Nnrf_NFDiscovery_Request message to the NRF to identify SMFs which serve the first DNN and/or the first network slice and which have the capability of subscribing for and/or reporting the user plane information, and receives at least one SMF meeting the third condition returned by the NRF through a response message corresponding to the request.

In actual use, the third information sent to each SMF in the at least one SMF meeting the third condition at least includes relevant information about the AOI. Upon the receipt of the third information, the SMF subscribes to the AMF for a terminal(s) located within the AOI according to the relevant information about the AOI to obtain the first terminal list, and then subscribes to a corresponding UPF for the user plane information about one or more terminals located within the AOI according to the first terminal list.

In actual use, in a case that the SMF subscribes to the AMF for a terminal(s) located within the AOI to obtain the first terminal list, the NWDAF may also merely initiate the subscription to at least one SMF serving the AOI. The SMF serving the AOI subscribes to the AMF for one or more terminals located within the AOI to obtain the first terminal list, and then subscribes to an anchor-SMF of the terminal served by the SMF as an intermediate-SMF for the user plane information about the corresponding terminals according to the first terminal list, or subscribes to a UPF corresponding to the terminal served by the SMF not as an intermediate-SMF (i.e., the terminal served by the SMF as a non-intermediate-SMF) for the user plane information about one or more terminals located within the AOI according to the first terminal list. In this way, the NWDAF can subsequently obtain complete user plane information about one or more terminals located within the AOI, so as to prevent the user plane information about any terminal which performs the service access in an inter-SMF service area manner from being missed, i.e., the NWDAF can accurately obtain or collect the user plane information about one or more terminals located within the AOI.

Based on the above, in an embodiment of the present disclosure, Step 301 specifically includes determining one or more SMFs meeting a fourth condition, i.e., determining at least one SMF meeting the fourth condition, and the fourth condition represents that the SMF serves an AOI.

Correspondingly, Step 302 specifically includes sending fourth information to the one or more SMFs meeting the fourth condition (i.e., each SMF in the at least one SMF meeting the fourth condition), and the fourth information is used to subscribe for user plane information about one or more terminals located within the AOI.

In actual use, it should be appreciated that, the SMF meeting the fourth condition further needs to have a capability of subscribing for and/or reporting the user plane information, and the NWDAF determines at least one SMF meeting the fourth condition through the NRF. To be specific, the NWDAF sends a Nnrf_NFDiscovery_Request message to the NRF to identify SMFs meeting the fourth condition which serve the AOI and have the capability of subscribing for and/or reporting the user plane information, and receives at least one SMF meeting the fourth condition returned by the NRF through a response message corresponding to the request.

In actual use, the fourth information sent to each SMF in the at least one SMF meeting the fourth condition at least includes relevant information about the AOI. Upon the receipt of the fourth information, the SMF subscribes to the AMF for one or more terminals located within the AOI according to the relevant information about the AOI to obtain the first terminal list, and then subscribes to an anchor-SMF of the terminal served by the SMF as an intermediate-SMF for the user plane information about the corresponding terminals according to the first terminal list, or subscribes to a UPF corresponding to the terminal served by the SMF not as an intermediate-SMF (i.e., the terminal served by the SMF as a non-intermediate-SMF) for the user plane information about one or more terminals located within the AOI according to the first terminal list. In this way, the NWDAF can subsequently obtain complete user plane information about one or more terminals located within the AOI, so as to prevent the user plane information about any terminal which performs the service access in an inter-SMF service area manner from being missed, i.e., the NWDAF can accurately obtain or collect the user plane information about one or more terminals located within the AOI.

Correspondingly, the present disclosure further provides in some embodiments an information transmission method, performed by an SMF. As shown in FIG. 4, the information transmission method includes the following steps.

Step 401: receiving subscription information sent by an NWDAF.

Step 402: subscribing to a corresponding UPF for user plane information about one or more terminals located within an AOI according to the received subscription information.

In an embodiment of the present disclosure, Step 401 specifically includes, in a case that a first condition is met, receiving first information sent by the NWDAF, the first condition represents that the SMF serves at least one terminal in a first terminal list for the NWDAF, the first terminal list includes at least one terminal located within the AOI, and the first information is used to subscribe for user plane information about one or more terminals located within the AOI.

In actual use, the first information at least includes a ninth terminal list, and the ninth terminal list includes at least one terminal in the first terminal list served by the SMF, i.e., the ninth terminal list includes at least one terminal in the first terminal list served by the SMF as a non-intermediate-SMF. Upon the receipt of the first information, the SMF subscribes to a corresponding UPF for user plane information about one or more terminals located within the AOI according to the ninth terminal list.

Based on the above, in an embodiment of the present disclosure, in a case that the first information has been received, Step 402 specifically includes: determining one or more UPFs meeting a seventh condition, i.e., determining at least one UPF meeting the seventh condition, according to the ninth terminal list, the seventh condition representing that the UPF serves at least one terminal in the ninth terminal list; and sending a fourteenth information to the one or more UPFs meeting the seventh condition (i.e., each UPF in the at least one UPF meeting the seventh condition), the fourteenth information being used to subscribe for user plane information about one or more terminals located within the AOI.

In actual use, the seventh condition represents that the UPF serves at least one terminal in the ninth terminal list, i.e., the seventh condition represents that the UPF serves, as a non-intermediate-UPF, at least one terminal in the ninth terminal list.

In actual use, it should be appreciated that, the UPF meeting the seventh condition further needs to have a capability of subscribing for and/or reporting the user plane information, and the SMF determines at least one UPF meeting the seventh condition through the NRF. To be specific, the SMF at first determines a UPF where each terminal in the ninth terminal list is located (i.e., a UPF serving the terminal as a non-intermediate-UPF), and then sends, to the NRF, a Nnrf_NFDiscovery_Request message to identify UPFs having the capability of subscribing for and/or reporting the user plane information. The Nnrf_NFDiscovery _Request message carries therein an Event Exposure Service Name corresponding to the capability of subscribing for and/or reporting the user plane information. Then, the SMF receives UPFs returned by the NRF through a response message corresponding to the request, and obtains an intersection of the determined UPFs where the terminal is located and the UPFs returned by the NRF to obtain the UPF where the terminal is located and which has the capability of subscribing for and/or reporting the user plane information, i.e., determine at least one UPF meeting the seventh condition.

In actual use, the SMF sends the fourteenth information to each UPF in the at least one UPF meeting the seventh condition via an N4 interface, and the fourteenth information at least includes an ID of at least one terminal in the ninth terminal list served by the UPF as a non-intermediate-UPF. Upon the receipt of the fourteenth information, the UPF reports the user plane information about a corresponding terminal (i.e., a relevant terminal(s) indicated in the fourteenth information, e.g., a terminal(s) corresponding to a terminal ID(s) included in the fourteenth information) to the NWDAF via a Nupf_EventExposure_Notify message according to the terminal ID(s) included in the fourteenth information.

In an embodiment of the present disclosure, Step 401 specifically includes, in a case that a second condition is met, receiving second information sent by the NWDAF, the second condition represents that the SMF serves at least one terminal in the second terminal list for the NWDAF, the second terminal list includes at least one terminal located within the AOI, and the second information is used to subscribe for user plane information about one or more terminals located within the AOI.

In actual use, the second information at least includes a tenth terminal list, and the tenth terminal list includes at least one terminal in the second terminal list served by the SMF, i.e., the tenth terminal list includes at least one terminal in the second terminal list served by the SMF as a non-intermediate-SMF. Upon the receipt of the second information, the SMF subscribes to a corresponding UPF for the user plane information about one or more terminals located within the AOI according to the tenth terminal list.

Based on the above, in an embodiment of the present disclosure, in a case that the second information has been received, Step 402 specifically includes: determining one or more UPFs meeting an eighth condition, i.e., determining at least one UPF meeting the eighth condition, according to the tenth terminal list, the eighth condition representing that the UPF serves at least one terminal in the tenth terminal list; and sending fifteenth information to the one or more UPFs meeting the eighth condition (i.e., each UPF in the at least one UPF meeting the eighth condition), the fifteenth information being used to subscribe for the user plane information about one or more terminals located within the AOI.

In actual use, the eighth condition represents that the UPF serves at least one terminal in the tenth terminal list, i.e., the eighth condition represents that the UPF serves, as a non-intermediate-UPF, at least one terminal in the tenth terminal list.

In actual use, it should be appreciated that, the UPF meeting the eighth condition further needs to have a capability of subscribing for and/or reporting the user plane information, and the SMF determines at least one UPF meeting the eighth condition through the NRF. A specific mode of determining, by the SMF, at least one UPF meeting the eighth condition through the NRF is the same as the specific mode of determining at least one of UPF meeting the seventh condition through the NRF, and thus will not be further detailed herein.

In actual use, the SMF sends the fifteenth information to each UPF in the at least one UPF meeting the eighth condition via an N4 interface, and the fifteenth information at least includes an ID of at least one terminal in the tenth terminal list served by the UPF as a non-intermediate-UPF. Upon the receipt of the fifth information, the UPF reports the user plane information about a corresponding terminal (i.e., a relevant terminal indicated in the fifteenth information, e.g., a terminal corresponding to a terminal ID included in the fifteenth information) to the NWDAF via a Nupf_EventExposure_Notify message according to the terminal ID included in the fifteenth information.

In an embodiment of the present disclosure, Step 401 specifically includes, in a case that a third condition is met, receiving third information sent by the NWDAF, the third condition represents that the SMF serves a first DNN and/or a first network slice, and the third information is used to subscribe for user plane information about one or more terminals located within the AOI.

In actual use, the third information at least includes relevant information about the AOI. Upon the receipt of the third information, the SMF subscribes to the AMF for a terminal(s) located within the AOI according to the relevant information about the AOI to obtain the first terminal list, and then subscribes to a corresponding UPF for the user plane information about one or more terminals located within the AOI according to the first terminal list.

Based on the above, in an embodiment of the present disclosure, in a case that the third information has been received, Step 402 specifically includes: subscribing to an AMF for a terminal(s) located within an AOI to obtain a first terminal list, the first terminal list including at least one terminal located within the AOI; determining one or more UPFs meeting a fifth condition, i.e., determining at least one UPF meeting the fifth condition, according to the first terminal list, the fifth condition representing that the UPF serves at least one terminal in the first terminal list; and sending sixth information to the one or more UPFs meeting the fifth condition (i.e., each UPF in the at least one UPF meeting the fifth condition), the sixth information being used to subscribe for the user plane information about one or more terminals located within the AOI.

In actual use, a specific mode of obtaining, by the SMF, the first terminal list through subscribing to the AMF for the terminal located within the AOI is the same as the specific mode of obtaining, by the SMF, the first terminal list through subscribing to the AMF for the terminal(s) located within the AOI, and thus will not be further detailed herein.

In actual use, the fifth condition represents that the UPF serves at least one terminal in the first terminal list, i.e., the fifth condition represents that the UPF serves, as a non-intermediate-UPF, at least one terminal in the first terminal list. In addition, it should be appreciated that, with respect to at least one terminal in the first terminal list served by the UPF as a non-intermediate-UPF, the SMF also serves these terminals as a non-intermediate SMF.

In actual use, it should be appreciated that, the UPF meeting the fifth condition further needs to have a capability of subscribing for and/or reporting the user plane information, and the SMF determines the at least one UPF meeting the fifth condition through the NRF. A specific mode of determining, by the SMF, at least one UPF meeting the fifth condition through the NRF is the same as the specific mode of determining, by the SMF, at least one UPF meeting the seventh condition through the NRF, and thus will not be further detailed herein.

In actual use, the SMF sends the sixth information to each UPF in the at least one UPF meeting the fifth condition via an N4 interface, and the sixth information at least includes an ID(s) of at least terminal in the first terminal list served by the UPF as a non-intermediate-UPF. Upon the receipt of the sixth information, the UPF reports the user plane information about a corresponding terminal(s) (i.e., a relevant terminal(s) indicated in the sixth information, e.g., a terminal(s) corresponding to a terminal ID(s) included in the sixth information) to the NWDAF via a Nupf_EventExposure_Notify message according to the terminal ID(s) included in the sixth information.

In actual use, in a case that the first request message includes a third terminal list, the third information also includes the third terminal list, and the third terminal list includes at least one terminal about which user plane information needs to be subscribed. At this time, the SMF needs to obtain an intersection of the third terminal list, the first terminal list and a sixth terminal list including at least one terminal served by the SMF itself to obtain a fifth terminal list, and then subscribes to a corresponding UPF for the user plane information about one or more terminals located within the AOI according to the fifth terminal list.

Based on the above, in an embodiment of the present disclosure, in a case that the third information has been received, Step 402 specifically includes: subscribing to an AMF for a terminal located within an AOI to obtain a first terminal list, the first terminal list including at least one terminal located within the AOI; determining a fifth terminal list, the fifth terminal list including at least one terminal located within the AOI, the fifth terminal list being obtained or determined according to the first terminal list; determining one or more UPFs meeting a sixth condition, i.e., determining at least one UPF meeting the sixth condition, according to the fifth terminal list, the sixth condition representing that the UPF serves at least one terminal in the fifth terminal list; and sending seventh information to the one or more UPFs meeting the sixth condition (i.e., each UPF in the at least one UPF meeting the sixth condition), the seventh information being used to subscribe for the user plane information about one or more terminals located within the AOI.

The fifth terminal list is obtained or determined according to the first terminal list, i.e., the fifth terminal list is a universal set or a subset of the first terminal list.

To be specific, in an embodiment of the present disclosure, in a case that the third information at least includes the third terminal list, the determining the fifth terminal list includes: obtaining a sixth terminal list, the sixth terminal list including at least one terminal served by the SMF; and comparing terminals included in the third terminal list, terminals included in the sixth terminal list, and terminals included in the first terminal list, to determine the fifth terminal list.

In actual use, the sixth terminal list includes at least one terminal served by the SMF, i.e., the sixth terminal list includes at least one terminal served by the SMF as a non-intermediate-SMF.

In actual use, the sixth condition represents that the UPF serves at least one terminal in the fifth terminal list, i.e., the sixth condition represents that the UPF serves, as a non-intermediate-UPF, at least one terminal in the fifth terminal list.

In actual use, it should be appreciated that, the UPF meeting the sixth condition further needs to have a capability of subscribing for and/or reporting the user plane information, and the SMF determines at least one UPF meeting the sixth condition through the NRF. A specific mode of determining, by the SMF, at least one UPF meeting the sixth condition through the NRF is the same as the specific mode of determining, by the SMF, at least one UPF meeting the seventh condition through the NRF, and thus will not be further detailed herein.

In actual use, the SMF sends the seventh information to each UPF in the at least one UPF meeting the sixth condition via an N4 interface, and the seventh information at least includes an ID(s) of at least one terminal in the fifth terminal served by the UPF as a non-intermediate-UPF. Upon the receipt of the seventh information, the UPF reports the user plane information about a corresponding terminal(s) (i.e., a relevant terminal(s) indicated in the seventh information, e.g., a terminal corresponding to a terminal ID(s) included in the seventh information) to the NWDAF via a Nupf_EventExposure_Notify message according to the terminal ID included in the seventh information.

In actual use, the SMF updates (or maintains) the first terminal list and/or the fifth terminal list through subscribing to the AMF for an event indicating that the terminal moves into or out of the AOI.

Based on the above, in an embodiment of the present disclosure, the information transmission method further includes: sending eighth information (i.e., a Namf_EventExposure_Subscribe request) to the AMF, the eight information being used to subscribe for an event indicating that a terminal moves into or out of the AOI; receiving a four terminal list sent by the AMF, the fourth terminal list including at least one terminal moving into or out of the AOI; and updating the first terminal list with the fourth terminal list, and/or updating the fifth terminal list with the fourth terminal list.

In a case that the sixth information is sent to each UPF in at least one UPF meeting the fifth condition, the SMF updates the first terminal list with the fourth terminal list. In a case that the seventh information is sent to each UPF in at least one UPF meeting the sixth condition, the SMF updates the first terminal list with the fourth terminal list, and then updates the fifth terminal list with the third terminal list, the sixth terminal list and the updated first terminal list, or the SMF directly updates the fifth terminal list with the third terminal list, the fourth terminal list and the sixth terminal list.

In an embodiment of the present disclosure, Step 401 specifically includes, in a case that a fourth condition is met, receiving fourth information sent by the NWDAF, the fourth condition represents that the SMF serves an AOI, and the fourth information is used to subscribe for user plane information about one or more terminals located within the AOI.

In actual use, the fourth information at least includes relevant information about the AOI. Upon the receipt of the fourth information, the SMF subscribes to the AMF for a terminal located within the AOI according to the relevant information about the AOI to obtain a first terminal list, and then subscribes to an anchor-SMF of the terminal served by the SMF as an intermediate-SMF for user plane information about a corresponding terminal according to the first terminal list, or subscribes to a UPF corresponding to a terminal served by the SMF not as an intermediate-SMF (i.e., a terminal served by the SMF as a non-intermediate-SMF) for user plane information about one or more terminals located within the AOI according to the first terminal list.

Based on the above, in an embodiment of the present disclosure, in a case that the fourth information has been received, Step 402 specifically includes: subscribing to an AMF for a terminal(s) located within an AOI to obtain a first terminal list, the first terminal list including at least one terminal located within the AOI; with respect to each terminal included in the first terminal list, in a case that the SMF serves the terminal as an intermediate-SMF, sending ninth information to an anchor-SMF of the terminal such that the anchor-SMF of the terminal subscribes to an anchor-UPF of the terminal for user plane information about the terminal, the ninth information being used to subscribe for user plane information about one or more terminals located within the AOI; and in a case that the SMF serves the terminal not as an intermediate-SMF (i.e., the SMF serves the terminal as a non-intermediate-SMF), sending tenth information to a UPF serving the terminal (i.e., a UPF serving the terminal as a non-intermediate-UPF), the tenth information being used to subscribe for user plane information about one or more terminals located within the AOI.

In actual use, the SMF sends the ninth information to the anchor-SMF of the terminal via an N16a interface, and the ninth information at least includes an ID(s) of a corresponding terminal(s). Upon the receipt of the ninth information, the ancho-SMF of the terminal sends, to the anchor-UPF of the terminal, a request message for subscribing for user plane information about the terminal(s) (the request message includes an ID(s) of the terminal(s)). Upon the receipt of the request message, the anchor-UPF of the terminal reports the user plane information about the terminal to the NWDAF through a Nupf_EventExposure_Notify message according to the ID(s) of the terminal(s).

In actual use, the SMF sends the tenth information to a UPF where a terminal is located (i.e., a UPF serving the terminal as a non-intermediate-UPF) via an N4 interface, and the tenth information at least includes an ID(s) of a corresponding terminal(s). Upon the receipt of the tenth information, the UPF where the terminal is located reports user plane information about the terminal to the NWDAF through a Nupf_EventExposure_Notify message according to an ID(s) of the terminal(s). In addition, it should be appreciated that, the UPF where the terminal is located further needs to have a capability for subscribing for and/or reporting the user plane information. The SMF determines, through the NRF, whether or not the UPF has the capability of subscribing for or reporting the user plane information, and sends the tenth information to the UPF in a case that the UPF has the capability of subscribing for and/or reporting the user plane information.

In actual use, in a case that the first request message includes a third terminal list, the fourth information also includes the third terminal list, and the third terminal list includes at least one terminal for which user plane information needs to be subscribed. At this time, the SMF needs to obtain an intersection of the third terminal list, the first terminal list and an eighth terminal list including at least one terminal served by the SMF itself, to obtain a seventh terminal list, and then subscribes to an anchor-SMF of a terminal served by the SMF as an intermediate-SMF for user plane information about a corresponding terminal(s) according to the seventh terminal list, or subscribes to a UPF corresponding to a terminal served by the SMF not as an intermediate SMF (i.e., a terminal served by the SMF as a non-intermediate-SMF) for user plane information about one or more terminals located within the AOI according to the seventh terminal list.

Based on the above, in an embodiment of the present disclosure, in a case that the fourth information has been received, Step 402 specifically includes: subscribing to an AMF for a terminal(s) located within an AOI to obtain a first terminal list, the first terminal list including at least one terminal located within the AOI; determining a seventh terminal list, the seventh terminal list including at least one terminal located within the AOI, the seventh terminal list being obtained or determined according to the first terminal list; with respect to each terminal included in the seventh terminal list, in a case that the SMF serves the terminal(s) as an intermediate-SMF, sending eleventh information to an anchor-SMF of the terminal(s) such that the anchor-SMF of the terminal(s) subscribes to an anchor-UPF of the terminal(s) for user plane information about the terminal(s), the eleventh information being used to subscribe for user plane information about one or more terminals located within the AOI; and in a case that the SMF serves the terminal(s) not as an intermediate-SMF (i.e., the SMF serves the terminal(s) as a non-intermediate-SMF), sending twelfth information to a UPF serving the terminal(s) (i.e., a UPF serving the terminal(s) as a non-intermediate-UPF), the twelfth information being used to subscribe for user plane information about one or more terminals located within the AOI.

The seventh terminal list is obtained or determined according to the first terminal list, i.e., the seventh terminal list is a universal set or a subset of the first terminal list.

To be specific, in an embodiment of the present disclosure, in a case that the fourth information at least includes the third terminal list, the determining the seventh terminal list includes: obtaining an eighth terminal list, the eighth terminal list including at least one terminal served by the SMF; and comparing terminals included in the third terminal list, terminals included in the eighth terminal list and terminals included in the first terminal list, to determine the seventh terminal list.

In actual use, the SMF sends the eleventh information to an anchor-SMF of a terminal(s) via an N16a interface, and the eleventh information at least includes an ID(s) of a corresponding terminal(s). Upon the receipt of the eleventh information, the anchor-SMF of the terminal(s) sends, to an anchor-UPF of the terminal(s), a request message for subscribing for user plane information about the terminal (the request message includes an ID(s) of the terminal(s)). Upon the receipt of the request message, the anchor-UPF of the terminal(s) reports the user plane information about the terminal(s) to the NWDAF through a Nupf_EventExposure_Notify message according to the ID(s) of the terminal(s).

In actual use, the SMF sends the twelfth information to a UPF where a terminal(s) is located (i.e., a UPF serving the terminal as a non-intermediate-UPF) via an N4 interface, and the twelfth information at least includes an ID(s) of a corresponding terminal(s). Upon the receipt of the twelfth information, the UPF where the terminal(s) is(are) located reports the user plane information about the terminal(s) to the NWDAF through a Nupf_EventExposure_Notify message according to the ID(s) of the terminal(s). In addition, it should be appreciated that, the UPF where the terminal(s) is(are) located further needs to have a capability of subscribing for and/or reporting user plane information. The SMF determines, through the NRF, whether or not the UPF has the capability of subscribing for and/or reporting the user plane information, and sends the twelfth information to the UPF in a case that the UPF has the capability of subscribing for and/or reporting the user plane information.

In actual use, the SMF subscribes to the AMF for an event indicating that the terminal moves into or out of the AOI to update (or maintain) the first terminal list and/or the seventh terminal list.

Based on the above, in an embodiment of the present disclosure, the information transmission method further includes: sending thirteenth information (i.e., a Namf_EventExposure_Subscribe request) to the AMF, the thirteenth information being used to subscribe for an event indicating that the terminal moves into or out of the AOI); receiving a fourth terminal list sent by the AMF, the fourth terminal list including at least one terminal moving into or out of the AOI; and updating the first terminal list with the fourth terminal list, and/or updating the seventh terminal list with the fourth terminal list.

In a case that the user plane information about the terminal is subscribed according to the first terminal list, the SMF updates the first terminal list with the fourth terminal list. In a case that the user plane information about the terminal is subscribed according to the seventh terminal list, the SMF updates the first terminal list with the fourth terminal list, and updates the seventh terminal list with the third terminal list, the eighth terminal list and the updated first terminal list, or the SMF directly updates the seventh terminal list with the third terminal list, the fourth terminal list and the eighth terminal list.

In actual use, in various embodiments of the present disclosure, a terminal list (the first terminal list, the second terminal list, the third terminal list, the fourth terminal list, the fifth terminal list, the sixth terminal list, the seventh terminal list, the eighth terminal list, the ninth terminal list or the tenth terminal list) may be understood as a terminal or a group/set of terminals, and specifically it includes an ID of each terminal. In addition, the terminal list may also be called as UE list. The name of the terminal list in the embodiments of the present disclosure will not be particularly defined herein.

According to the information transmission method in the embodiments of the present disclosure, the NWDAF subscribes to the AMF for a terminal(s) located within an AOI to obtain a first terminal list, the first terminal list including at least one terminal located within the AOI; and sends first information to the SMF meeting a first condition, the first condition representing that the SMF serves at least one terminal in the first terminal list, and the first information being used to subscribe for user plane information about one or more terminals located within the AOI; or the NWDAF subscribes to the AMF for a terminal(s) located within an AOI to obtain a first terminal list, the first terminal list including at least one terminal located within the AOI; determines a second terminal list, the second terminal list including at least one terminal located within the AOI, and the second terminal list being obtained or determined according to the first terminal list; and sends second information to an SMF meeting a second condition, the second condition representing that the SMF serves at least one terminal in the second terminal list, and the second information being used to subscribe for user plane information about one or more terminals located within the AOI; or the NWDAF sends third information to an SMF meeting a third condition, the third condition representing that the SMF serves a first DNN and/or a first network slice, and the third information being used to subscribe for user plane information about one or more terminals located within an AOI; or the NWDAF sends fourth information to an SMF meeting a fourth condition, the fourth condition representing that the SMF serves an AOI, and the fourth information being used to subscribe for user plane information about one or more terminals located within the AOI. In the embodiments of the present disclosure, considering a mobility scenario for the terminal in an SSC mode 1 (mode 1), i.e., considering a situation in which the terminal performs service access in an inter-SMF service area manner, the NWDAF may determine an SMF meeting a specific condition, and then subscribe to the SMF meeting the specific condition for the user plane information about one or more terminals located within the AOI.

In a case that the NWDAF subscribes to an SMF meeting the first condition for the user plane information about one or more terminals located within the AOI, the first condition represents that the SMF serves at least one terminal in the first terminal list, and the first terminal list obtained through the AMF and including at least one terminal located within the AOI necessarily includes one or more terminals that perform the service access in an inter-SMF service area manner, so the NWDAF subscribes to the SMF meeting the first condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting the second condition for the user plane information about one or more terminals located within the AOI, the second condition represents that the SMF serves at least one terminal in the second terminal list, the second terminal list including at least one terminal located within the AOI is obtained or determined according to the first terminal list, and the first terminal list obtained through the AMF necessarily includes one or more terminals that perform the service access in an inter-SMF service area manner, so the second terminal list also includes one or more terminals that perform the service access in an inter-SMF service area manner, and the NWDAF subscribes to the SMF meeting the second condition for the user plane information about one or more terminals located within the AOI, without missing any user plane information about any terminal that performs the service access in an inter-SMF service area manner, i.e., the NWDAF may subsequently obtain relatively complete user plane information about one or more terminals located within the AOI. In other words, the NWDAF may accurately obtain or collect the user plane information about one or more terminals located within the AOI.

In a case that the NWDAF subscribes to an SMF meeting the third condition for the user plane information about one or more terminals located within the AOI, the third condition represents that the SMF serves a first DNN and/or a first network slice, so the NWDAF subscribes to all SMFs, which serve a specific network, a specific service or a certain operator, for the user plane information about one or more terminals located within the AOI. These SMFs meeting the third condition may each subsequently obtain, through the AMF, the first terminal list including at least one terminal located within the AOI, and then subscribe to a UPF corresponding to the terminal served by the SMF itself for the user plane information about one or more terminals located within the AOI according to the first terminal list. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

In a case that the NWDAF subscribes to an SMF meeting the fourth condition for the user plane information about one or more terminals located within the AOI, the fourth condition represents that the SMF serves an AOI, so the NWDAF may subscribe to all SMFs which serve the AOI for the user plane information about one or more terminals located within the AOI. These SMFs meeting the fourth condition may each subsequently obtain, through the AMF, the first terminal list including at least one terminal located within the AOI, and then subscribe to an anchor-SMF of the terminal served by the SMF as an intermediate-SMF for the user plane information about the corresponding terminals according to the first terminal list, or subscribe to a UPF corresponding to the terminal served by the SMF, not as an intermediate-SMF, for the user plane information about one or more terminals located within the AOI. In this way, the NWDAF may subsequently obtain relatively complete user plane information about one or more terminals located within the AOI, without missing any user plane information about any terminal that performs the service access in an inter-SMF service area manner. In other words, the NWDAF may accurately obtain or collect the user plane information about one or more terminals located within the AOI.

The following detailed description will be given hereinafter in conjunction with an application instance.

In this application instance, the terminal is called as UE, the terminal list is called as UE list, and the user plane information is called as UPF data. The anchor SMF is represented as anchor-SMF, the intermediate SMF is represented as I-SMF, the non-intermediate SMF is represented as non-I-SMI, the anchor UPF is represented as anchor-UPF, the intermediate UPF is represented as I-UPF, and the non-intermediate UPF is represented as non-I-UPF.

In this application instance, the following three UPF data exposure cases with respect to an AOI have been presented by taking a mobility scenario where a user is in an SSC mode 1 into consideration, i.e., taking a situation where the user performs service access in an inter-SMF service area manner.

Case 1: an NWDAF subscribes a UE list about one or more UEs located within an AOI through an AMF, identifies an SMF where the UEs are located (i.e., a non-I-SMF) through a UDM, and then initiates UPF data subscription of a corresponding UE to the SMF.

Case 2: an NWDAF initiates UPF data subscription of UEs about one or more UEs located within an AOI to all SMFs associated with a specific DNN (i.e., the first DNN) or a specific slice (i.e., the first network slice). Each SMF subscribes for a UE list about one or more UEs located within the AOI through an AMF, and determines whether or not there is a UE in the UE list on the SMF as a non-I-SMF. In a case that there is the UE in the UE list, the SMF initiates UPF data subscription of the UE to a corresponding UPF (i.e., a non-I-UPF) where the UE is located.

Case 3: an NWDAF identifies all SMFs corresponding to an AOI through an NRF, and initiates UPF data subscription of UEs located within the AOI to these SMFs. Each SMF subscribes for a UE list about one or more UEs located within the AOI through an AMF, and determines whether or not a UE in the UE list is located on the SMF (the SMF is an I-SMF or a non-I-SMF). In a case that a UE is located on the SMF, the SMF needs to further determine whether or not the SMF itself serves the UE as an I-SMF. In a case that the SMF serves the UE as an I-SMF, the SMF needs to forward a UPF data subscription message of the UE to an anchor-SMF of the UE via an N16a interface, and the anchor-SMF initiates UPF data subscription of the UE to an anchor-UPF. In a case that the SMF serves the UE as a non-I-SMF, the SMF directly initiates the UPF data subscription of the UE to a non-I-UPF of the UE.

Specific procedures of the above three cases will be described hereinafter in details in conjunction with FIGS. 5 to 7.

In this application instance, as shown in FIG. 5, case 1 specifically includes the following steps.

Step 501: an NWDAF initiates a Namf_EventExposure_Subscribe request (i.e., the second request message) to an AMF to obtain a UE list about one or more UEs located within an AOI (i.e., the first terminal list), and then Step 502 is executed.

Here, the Namf_EventExposure_Subscribe request for obtaining the UE list about one or more UEs located within the AOI is expressed as Namf_EventExposure_Subscribe using "Number of UEs present in a geographical area".

Step 502: the NWDAF initiates an Namf_EventExposure_Subscribe request (i.e., the fifth information) to the AMF to obtain UE update information (i.e., the fourth terminal list) within the AOI, and then Step 503 is executed.

Here, the Namf_EventExposure_Subscribe request for obtaining the UE update information within the AOI is expressed as Namf_EventExposure_Subscribe using "UE moving in or out of Area of Interest".

Step 503: the NWDAF determines a UE list for UPF data reporting (i.e., the first terminal list or the second terminal list), and then Step 504 is executed.

Here, the first request message received by the NWDAF, which is sent by an AF or a core network network function other than the NWDAF and which is used to request to subscribe for UPF data about a UE(s) located within the AOI, includes AOI information and an ID(s) of one UE or a group of UEs (i.e., the third terminal list). In a case that the first request message merely includes the AOI information, the UE list for UPF data reporting refers to the first terminal list, and in a case that the first request message includes the ID(s) of one UE or a group of UEs, the UE list for UPF data reporting refers to the second terminal list.

Step 504: the NWDAF identifies, through a UDM, an SMF (i.e., a non-I-SMF) where each UE is located in the UE list, and then Step 505 is executed.

Here, the NWDAF sends a Nudm_UECM_Get request message to the UDM, and receives a response message corresponding to the request message from the UDM.

Step 505: the NWDAF identifies, through an NRF, an SMF having a capability of subscribing for and/or reporting UPF data, and then Step 506 is executed.

Here, the NWDAF initiates a Nnrf_NFDiscovery _Request message to the NRF to identify an SMF having a capability of subscribing for and/or reporting UPF data, and this message carries therein an Event Exposure Service Name corresponding to the capability of subscribing for and/or reporting UPF data. The NWDAF may further receive a response message corresponding to the request from the NRF.

Step 506: the NWDAF subscribes to an SMF where the UE(s) is(are) located and which has a capability of subscribing for and/or reporting the UPF data (i.e., an SMF meeting the first condition or the second condition) for UPF data about one or more UEs located within the AOI, and then Step 507 is executed.

Here, the NWDAF sends a subscription message (i.e., the first information or the second information) to the SMF, and the subscription message is expressed as UPF Data Subscription Request with "Event Exposure Service Name". In addition, in this step, the NWDAF initiates UPF data subscription to a UPF where the UE is located through an SMF where the UE is located and which has a capability of subscribing for and/or reporting UPF data.

Step 507: the SMF identifies, through the NRF, a UPF having a capability of subscribing for and/or reporting UPF data, and then Step 508 is executed.

Step 508: the SMF initiates UPF data subscription (i.e., the fourteenth information or the fifteenth information) to a UPF where the UE is located and which has a capability of subscribing for and/or reporting UPF data (i.e., a UPF meeting the seventh condition or the eighth condition), and then Step 509 is executed.

Here, prior to initiating the subscription to the UPF, the SMF establishes a connection through a Session Establishment Request/Response message, and initiates the subscription to the UPF via an N4 interface.

Step 509: the UPF reports UPF data about relevant UEs located within the AOI to the NWDAF through a Nupf_EventExposure_Notify message.

In actual use, Step 502 is optional, i.e., Step 502 may be executed or not executed depending on the practical need.

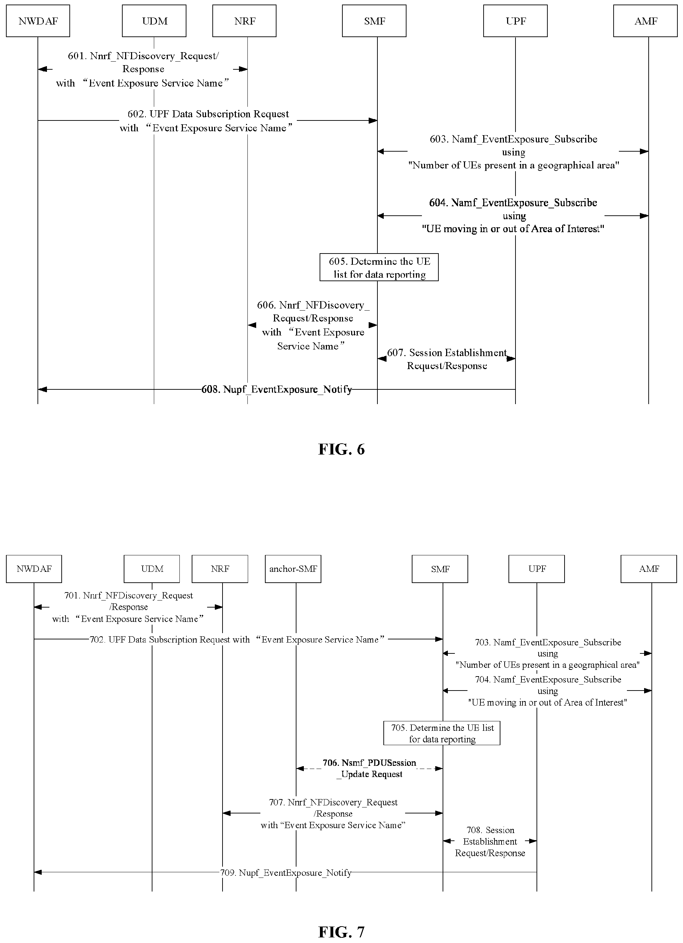

In this application instance, as shown in FIG. 6, case 2 specifically includes the following steps.

Step 601: an NWDAF identifies, through an NRF, an SMF which serves a specific DNN (i.e., the first DNN) or a specific slice (i.e., the first network slice) and which has a capability of subscribing for and/or reporting UPF data (i.e., an SMF meeting the third condition), and then Step 602 is executed.

Here, the NWDAF initiates a Nnrf_NFDiscovery_Request message to the NRF to identifies an SMF which serves a specific DNN or a specific slice and which has a capability of subscribing for and/or reporting UPF data (i.e., an SMF meeting the third condition), and this message carries therein an Event Exposure Service Name corresponding to the capability of subscribing for and/or reporting UPF data. The NWDAF may further receive a response message corresponding to the request from the NRF.

Step 602: the NWDAF subscribes to the SMF obtained in Step 601 for UPF data about one or more UEs located within an AOI (i.e., sends the third information), and then Step 603 is executed.

Here, a subscription message sent by the NWDAF to the SMF is expressed as UPF Data Subscription Request with "Event Exposure Service Name", and this message carries therein AOI information.

Step 603: the SMF initiates a Namf_EventExposure_Subscribe request to the AMF to subscribe for a UE list about one or more UEs located within an AOI (i.e., the first terminal list), and then Step 604 is executed.

Here, the Namf_EventExposure_Subscribe request for obtaining the UE list about one or more UEs located within the AOI is expressed as Namf_EventExposure_Subscribe using "Number of UEs present in a geographical area".

Step 604: the SMF initiates a Namf_EventExposure_Subscribe (i.e., the eighth information) to the AMF to obtain UE update information within the AOI (i.e., the fourth terminal list), and then Step 605 is executed.

Here, the Namf_EventExposure_Subscribe request for obtaining the UE update information within the AOI is expressed as Namf_EventExposure_Subscribe using "UE moving in or out of Area of Interest".

Step 605: the SMF determines a UE list for UPF data reporting (i.e., the first terminal list or the fifth terminal list), and determines whether or not there is a UE in the UE list on the SMF (i.e., a non-I-SMF). If yes, Step 606 is executed.

Here, the first request message received by the NWDAF, which is sent by an AF or a core network network function other than the NWDAF and which is used to request to subscribe for UPF data about one or more UEs located within the AOI, includes AOI information and an ID(s) of one UE or a group of UEs (i.e., the third terminal list). In a case that the first request message merely includes the AOI information, the UE list for UPF data reporting refers to the first terminal list, and in a case that the first request message includes the ID(s) of one UE or a group of UEs, the UE list for UPF data reporting refers to the fifth terminal list. In addition, in a case that there is no UE in the UE list on the SMF, a current procedure is ended.

Step 606: the SMF identifies, through the NRF, a UPF having a capability of subscribing for and/or reporting UPF data, and then Step 607 is executed.

Step 607: the SMF initiates UPF data subscription (i.e., the sixth information or the seventh information) to a UPF where the UE is located and which has a capability of subscribing for and/or reporting UPF data (i.e., a UPF meeting the fifth condition or the sixth condition), and then Step 608 is executed.

Here, prior to initiating the subscription to the UPF (i.e., the non-I-UPF), the SMF establishes a connection through a Session Establishment Request/Response message, and initiates the subscription to the UPF via an N4 interface.

Step 608: the UPF reports UPF data about relevant UEs located within the AOI to the NWDAF through a Nupf_EventExposure_Notify message.

In actual use, Step 604 is optional, i.e., Step 604 may be executed or not executed depending on the practical need.

In this application instance, as shown in FIG. 7, case 3 specifically includes the following steps.

Step 701: an NWDAF identifies, through an NRF, an SMF which serves an AOI and which has a capability of subscribing for and/or reporting UPF data (i.e., an SMF meeting the fourth condition), and then Step 702 is executed.

Here, the NWDAF identifies an SMF which serves the AOI and which has the capability of subscribing for and/or reporting UPF data (i.e., an SMF meeting the fourth condition) through initiating a Nnrf_NFDiscovery _Request message to the NRF, and this message carries therein an Event Exposure Service Name corresponding to the capability of subscribing for and/or reporting UPF data. The NWDAF may further receive a response message corresponding to the request from the NRF.

Step 702: the NWDAF subscribes to the SMF obtained in Step 701 for UPF data about one or more UEs located within the AOI (i.e., sends the fourth information), and then Step 703 is executed.

Here, a subscription message sent by the NWDAF to the SMF is expressed as UPF Data Subscription Request with "Event Exposure Service Name", and this message may carry therein AOI information.

Step 703: the SMF initiates a Namf_EventExposure_Subscribe request to an AMF to subscribe for a UE list about one or more terminals located within the AOI (i.e., the first terminal list), and then Step 704 is executed.

Here, the Namf_EventExposure_Subscribe request for obtaining the UE list about one or more UEs located within the AOI is expressed as Namf_EventExposure_Subscribe using "Number of UEs present in a geographical area".

Step 704: the SMF sends a Namf_EventExposure_Subscribe request (i.e., the thirteenth information) to the AMF to obtain UE update information within the AOI (i.e., the fourth terminal list), and then Step 705 is executed.

Here, the Namf_EventExposure_Subscribe request for obtaining the UE update information within the AOI is expressed as Namf_EventExposure_Subscribe using "UE moving in or out of Area of Interest".

Step 705: the SMF determines a UE list for UPF data reporting (i.e., the first terminal list or the seventh terminal list) and determines whether or not there is a UE in the UE list on the SMF (as an I-SMF or a non-I-SMF). In a case that there is a UE in the UE list, the SMF determines whether or not the SMF itself serves the UE as an I-SMF, if yes, Step 706 is executed, and if not, Step 707 is executed.

Here, the first request message received by the NWDAF, which is sent by an AF or a core network network function other than the NWDAF and which is used to request to subscribe for UPF data about one or more UEs located within the AOI, includes AOI information and an ID(s) of one UE or a group of UEs (i.e., the third terminal list). In a case that the first request message merely includes the AOI information, the UE list for UPF data reporting refers to the first terminal list, and in a case that the first request message includes the ID of one UE or a group of UE, the UE list for UPF data reporting refers to the seventh terminal list. In addition, in a case that there is no UE in the UE list on the SMF, a current procedure is ended.

Step 706: an I-SMF initiates UPF data subscription of a corresponding UE to an anchor-SMF (i.e., sends the ninth information or eleventh information), the anchor-SMF initiates the UPF data subscription of the corresponding UE to an anchor-UPF, and then Step 709 is executed.

Here, the I-SMF initiates the UPF data subscription of the corresponding UE to the anchor-SMF through a Nsmf_PDUSession_Update Request.

Step 707: the SMF identifies, through the NRF, a UPF having a capability of subscribing for and/or reporting UPF data, and then Step 708 is executed.

Step 708: the SMF initiates UPF data subscription to the UPF where the UE is located and which has the capability of subscribing for and/or reporting UPF data (i.e., sends the tenth information or twelfth information), and then Step 709 is executed.

Here, prior to initiating the subscription to the UPF (i.e., a non-I-UPF), the SMF establishes a connection through a Session Establishment Request/Response message, and initiates the subscription to the UPF via an N4 interface.

Step 709: the UPF reports UPF data about a relevant UE(s) located within the AOI to the NWDAF through a Nupf_EventExposure _Notify message.

In actual use, Step 704 is optional, i.e., Step 704 may be executed or not executed depending on the practical needs.

In the above three cases provided in the application instance, the NWDAF initiates, through the SMF, the UPF data subscription about one or more UEs located within the AOI to the UPF according to the AOI, with the mobility scenario where the UE is in an SSC mode 1 being taking into consideration, i.e., considering a situation where the UE performs service access in an inter-SMF service area manner. The UPF data needs to be collected by the anchor-UPF rather than by the I-UPF, such that through the above three cases, it is able to completely identify the anchor-SMF and the corresponding anchor-UPF of the UE in a case that the UE performs service access in an inter-SMF service area manner. In this way, the NWDAF obtains the complete UPF data about one or more UEs located within the AOI, i.e., the NWDAF accurately obtains or collects the UPF data about one or more UEs located within the AOI.

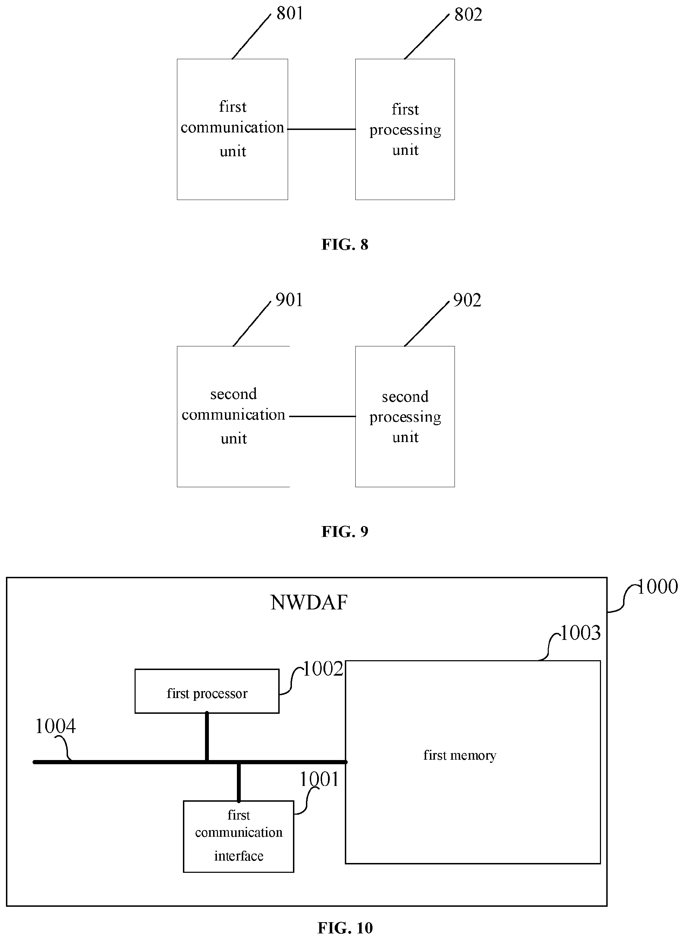

In order to implement the above-mentioned information transmission method at an NWDAF side, the present disclosure further provides in some embodiments an information transmission apparatus arranged at an NWDAF. As shown in FIG. 8, the information transmission apparatus includes a first communication unit 801 and a first processing unit 802.

The first communication unit 801 is configured to subscribe to an AMF for a terminal(s) located within an AOI to obtain a first terminal list, the first terminal list including at least one terminal located within the AOI; and send first information to an SMF meeting a first condition, the first condition representing that the SMF serves at least one terminal in the first terminal list, and the first information being used to subscribe for user plane information about one or more terminals located within the AOI.

Alternatively, the first communication unit 801 is configured to subscribe to an AMF for a terminal(s) located within an AOI to obtain a first terminal list, the first terminal list including at least one terminal located within the AOI; the first processing unit 802 is configured to determine a second terminal list, the second terminal list including at least one terminal located within the AOI, and the second terminal list being obtained or determined according to the first terminal list; and the first communication unit 801 is further configured to send second information to an SMF meeting a second condition, the second condition representing that the SMF serves at least one terminal in the second terminal list, and the second information being used to subscribe for user plane information about one or more terminals located within the AOI.

Alternatively, the first communication unit 801 is configured to send third information to an SMF meeting a third condition, the third condition represents that the SMF serves a first DNN and/or a first network slice, and the third information is used to subscribe for user plane information about one or more terminals located within an AOI.

Alternatively, the first communication unit 801 is configured to send fourth information to an SMF meeting a fourth condition, the fourth condition represents that the SMF serves an AOI, and the fourth information is used to subscribe for user plane information about one or more terminals located within the AOI.

In an embodiment of the present disclosure, the first processing unit 802 is further configured to: obtain a third terminal list, the third terminal list including at least one terminal about which user plane information needs to be subscribed; and compare terminals included in the third terminal list with terminals included in the first terminal list to determine the second terminal list.

In an embodiment of the present disclosure, the first communication unit 801 is further configured to: send fifth information to the AMF, the fifth information being used to subscribe for an event indicating that a terminal moves into or out of the AOI; and receive a fourth terminal list sent by the AMF, the fourth terminal list including at least one terminal moving into or out of the AOI. Correspondingly, the first processing unit 802 is configured to update the first terminal list with the fourth terminal list, and/or update the second terminal list with the fourth terminal list.

In actual use, the first communication unit 801 is implemented via a communication interface in the information transmission apparatus, and the first processing unit 802 is implemented via a processor in the information transmission apparatus.

In order to implement the above-mentioned information transmission method at an SMF side, the present disclosure further provides in some embodiments an information transmission apparatus arranged at an SMF. As shown in FIG. 9, the information transmission apparatus includes a second communication apparatus 901.

The second communication unit 901 is configured to, in a case that a first condition is met, receive first information sent by an NWDAF, the first condition represents that the SMF serves at least one terminal in a first terminal list for the NWDAF, the first terminal list includes at least one terminal located within an AOI, and the first information is used to subscribe for user plane information about one or more terminals located within the AOI.

Alternatively, the second communication unit 901 is configured to, in a case that a second condition is met, receive second information sent by an NWDAF, the second condition represents that the SMF serves at least one terminal in a second terminal list for the NWDAF, the second terminal list includes at least one terminal located within an AOI, and the second information is used to subscribe for user plane information about one or more terminals located within the AOI.

Alternatively, the second communication unit 901 is configured to, in a case that a third condition is met, receive third information sent by an NWDAF, the third condition represents that the SMF serves a first DNN and/or a first network slice, and the third information is used to subscribe for user plane information about one or more terminals within an AOI.

Alternatively, the second communication unit 901 is configured to, in a case that a fourth condition is met, receive fourth information sent by an NWDAF, the fourth information represents that the SMF serves an AOI, and the fourth information is used to subscribe for user plane information about one or more terminals located within the AOI.

In an embodiment of the present disclosure, in a case that the third information has been received, the second communication unit 901 is further configured to: subscribe to an AMF for one or more terminals located within the AOI to obtain the first terminal list, the first terminal list including at least one terminal located within the AOI; and send sixth information to a UPF meeting a fifth condition, the fifth condition representing that the UPF serves at least one terminal in the first terminal list, and the sixth information being used to subscribe for user plane information about the one or more terminals located within the AOI.

In an embodiment of the present disclosure, the information transmission apparatus further includes a second processing unit 902. In a case that the third information has been received, the second communication unit 901 is further configured to subscribe to an AMF for the one or more terminals located within the AOI to obtain the first terminal list, and the first terminal list includes at least one terminal located within the AOI. Correspondingly, the second processing unit 902 is configured to determine a fifth terminal list, the fifth terminal list includes at least one terminal located within the AOI, and the fifth terminal list is obtained or determined according to the first terminal list. The second communication unit 901 is further configured to send seventh information to a UPF meeting a sixth condition, the sixth condition represents that the UPF serves at least one terminal in the fifth terminal list, and the seventh information is used to subscribe for user plane information about the one or more terminals located within the AOI.

In an embodiment of the present disclosure, the third information at least includes a third terminal list, and the third terminal list includes at least one terminal about which user plane information needs to be subscribed. The second processing unit 902 is further configured to: obtain a sixth terminal list, the sixth terminal list including at least one terminal served by the SMF; and compare terminals included in the third terminal list, terminals included in the sixth terminal list, and terminals included in the first terminal list, to determine the fifth terminal list.

In an embodiment of the present disclosure, the second communication unit 901 is further configured to: send eighth information to the AMF, the eighth information being used to subscribe for an event indicating a terminal moving into or out of the AOI; and receive a fourth terminal list sent by the AMF, the fourth terminal list including at least one terminal moving into or out of the AOI. Correspondingly, the second processing unit 902 is further configured to update the first terminal list with the fourth terminal list, and/or update the fifth terminal list with the fourth terminal list.

In an embodiment of the present disclosure, in a case that the fourth information has been received, the second communication unit 901 is further configured to: subscribe to an AMF for the one or more terminals located within the AOI to obtain a first terminal list, the first terminal list including at least one terminal located within the AOI; for each terminal included in the first terminal list, in a case that the SMF, as an intermediate-SMF, serves the terminal, send ninth information to an anchor-SMF of the terminal so that the anchor-SMF of the terminal subscribes to an anchor-UPF of the terminal for user plane information about the terminal, the ninth information being used to subscribe for user plane information about the terminal located within the AOI; and in a case that the SMF, as not an intermediate-SMF, serves the terminal, send tenth information to a UPF serving the terminal, the tenth information being used to subscribe for user plane information about the terminal located within the AOI.

In an embodiment of the present disclosure, in a case that the fourth information has been received, the second communication unit 901 is further configured to subscribe to an AMF for the one or more terminals located within the AOI to obtain a first terminal list, and the first terminal list includes at least one terminal located within the AOI. The second processing unit 902 is further configured to determine a seventh terminal list, the seventh terminal list includes at least one terminal located within the AOI, and the seventh terminal list is obtained or determined according to the first terminal list. The second communication unit 901 is further configured to: for each terminal included in the seventh terminal list, in a case that the SMF, as an intermediate-SMF, serves the terminal, send eleventh information to an anchor-SMF of the terminal, such that the anchor-SMF of the terminal subscribes to an anchor-UPF of the terminal for user plane information about the terminal, the eleventh information being used to subscribe for user plane information about the terminal located within the AOI; and in a case that the SMF, as not an intermediate-SMF, serves the terminal, send twelfth information to a UPF serving the terminal, the twelfth information being used to subscribe for user plane information about the terminal located within the AOI.

In an embodiment of the present disclosure, the fourth information at least includes a third terminal list, and the third terminal list includes at least one terminal about which user plane information needs to be subscribed. The second processing unit 902 is further configured to: obtain an eighth terminal list, the eighth terminal list including at least one terminal served by the SMF; and compare terminals included in the third terminal list, terminals included in the eighth terminal list, and terminals included in the first terminal list, to determine the seventh terminal list.

In an embodiment of the present disclosure, the second communication unit 901 is further configured to: send thirteenth information to the AMF, the thirteenth information being used to subscribe an event indicating that a terminal moves into or out of the AOI; and receive a fourth terminal list sent by the AMF, the fourth terminal list including at least one terminal moving into or out of the AOI. Correspondingly, the second processing unit 902 is further configured to update the first terminal list with the fourth terminal list, and/or update the seventh terminal list with the fourth terminal list.

In an embodiment of the present disclosure, the first information at least includes a ninth terminal list, and the ninth terminal list includes at least one terminal in the first terminal list served by the SMF. In a case that the first information has been received, the second communication unit 901 is further configured to send fourteenth information to a UPF meeting a seventh condition, the seventh condition represents that the UPF serves at least one terminal in the ninth terminal list, and the fourteenth information is used to subscribe for user plane information about the one or more terminals located within the AOI.

In an embodiment of the present disclosure, the second information at least includes a tenth terminal list, and the tenth terminal list includes at least one terminal in the second terminal list served by the SMF. In a case that the second information has been received, the second communication unit 901 is further configured to send fifteenth information to a UPF meeting an eighth condition, the eighth condition represents that the UPF serves at least one terminal in the tenth terminal list, and the fifteenth information is used to subscribe for user plane information about the one or more terminals located within the AOI.

In actual use, the second communication unit 901 is implemented via a communication interface in the information transmission apparatus, and the second processing unit 902 is implemented via a processor in the information transmission apparatus.

It should be appreciated that, in a case of information transmission, the information transmission apparatus provided in the embodiments of the present disclosure is merely illustratively described on the basis of the above-mentioned program modules. In actual use, the above-mentioned processing may be achieved through different program modules according to the practical needs, i.e., an internal structure of the information transmission apparatus is divided into different program modules to complete all, or part of, the processing mentioned hereinabove. In addition, the information transmission apparatus and the information transmission method belong to a same inventive concept, and the implementation of the information transmission apparatus may refer to that of the information transmission method, which will not be particularly defined herein.

Based on the above-mentioned hardware implementation of program modules, in order to implement the information transmission method at a NWDAF side, the present disclosure further provides in some embodiments a NWDAF. As shown in FIG. 10, the NWDAF 1000 includes: a first communication interface 1001 configured to perform information interaction with another network function (e.g., an SMF or an AMF); a first processor 1002 coupled to the first communication interface to perform information interaction with the other network function, and configured to execute a computer program to implement the information transmission method at an NWDAF side provided in one or more technical solutions; and a first memory 1003 configured to store therein the computer program.

To be specific, the first communication interface 1001 is configured to subscribe to an AMF for a terminal(s) located within an AOI to obtain a first terminal list, the first terminal list including at least one terminal located within the AOI; and send first information to an SMF meeting a first condition, the first condition representing that the SMF serves at least one terminal in the first terminal list, and the first information being used to subscribe for user plane information about one or more terminals located within the AOI.

Alternatively, the first communication interface 1001 is configured to subscribe to an AMF for a terminal(s) located within an AOI to obtain a first terminal list, the first terminal list including at least one terminal located within the AOI; the first processing unit 1002 is configured to determine a second terminal list, the second terminal list including at least one terminal located within the AOI, and the second terminal list being obtained or determined according to the first terminal list; and the first communication unit 1001 is further configured to send second information to an SMF meeting a second condition, the second condition representing that the SMF serves at least one terminal in the second terminal list, and the second information being used to subscribe for user plane information about one or more terminals located within the AOI.

Alternatively, the first communication interface 1001 is configured to send third information to an SMF meeting a third condition, the third condition represents that the SMF serves a first DNN and/or a first network slice, and the third information is used to subscribe for user plane information about one or more terminals located within an AOI.

Alternatively, the first communication interface 1001 is configured to send fourth information to an SMF meeting a fourth condition, the fourth condition represents that the SMF serves an AOI, and the fourth information is used to subscribe for user plane information about one or more terminals located within the AOI.

In an embodiment of the present disclosure, the first processor 1002 is further configured to: obtain a third terminal list, the third terminal list including at least one terminal about which user plane information needs to be subscribed; and compare terminals included in the third terminal list with terminals included in the first terminal list to determine the second terminal list.

In an embodiment of the present disclosure, the first communication interface 1001 is further configured to: send fifth information to the AMF, the fifth information being used to subscribe for an event indicating that a terminal moves into or out of the AOI; and receive a fourth terminal list sent by the AMF, the fourth terminal list including at least one terminal moving into or out of the AOI. Correspondingly, the first processor 1002 is configured to update the first terminal list with the fourth terminal list, and/or update the second terminal list with the fourth terminal list.

It should be appreciated that, specific processing procedures of the first communication interface 1001 and the first processor 1002 may refer to those in the above-mentioned information transmission method, and thus will not be further detailed herein.

Of course, in actual use, components of the NWDAF 1000 are coupled to each other via a bus system 1004. It should be appreciated that, the bus system 1004 is configured to achieve connection and communication among these components. Apart from a data bus, the bus system 1004 may further include a power source bus, a control bus and a state signal bus. For clarification, all these buses in FIG. 10 may be collectively called as bus system 1004.

In the embodiments of the present disclosure, the first memory 1003 stores therein various types of data to support an operation of the NWDAF 1000, and examples of the data include any computer program operated on the NWDAF 1000.

The above-mentioned information transmission method may be applied to, or implemented by, the first processor 1002. The first processor 1002 may be an integrated circuit (IC) having a signal processing capability. During the implementation, the steps of the above-mentioned information transmission method may be completed through an integrated logic circuit of hardware in the first processor 1002 or instructions in the form of software. The first processor 1002 may be a general-purpose processor, a Digital Signal Processor (DSP), or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a storage medium, and the storage medium may be located in the first memory 1003. The first processor 1002 may read information stored in the first memory 1003 so as to implement the steps of the method in conjunction with the hardware.

Illustratively, the NWDAF 1000 may be implemented by one or more of Application Specific Integrated Circuit (ASIC), DSP, Programmable Logic Devices (PLD), Complex Programmable Logic Device (CPLD), Field-Programmable Gate Array (FPGA), general-purpose processor, controller, Micro Controller Unit (MCU), microprocessor, or any other electronic element, so as to implement the above-mentioned information transmission method.

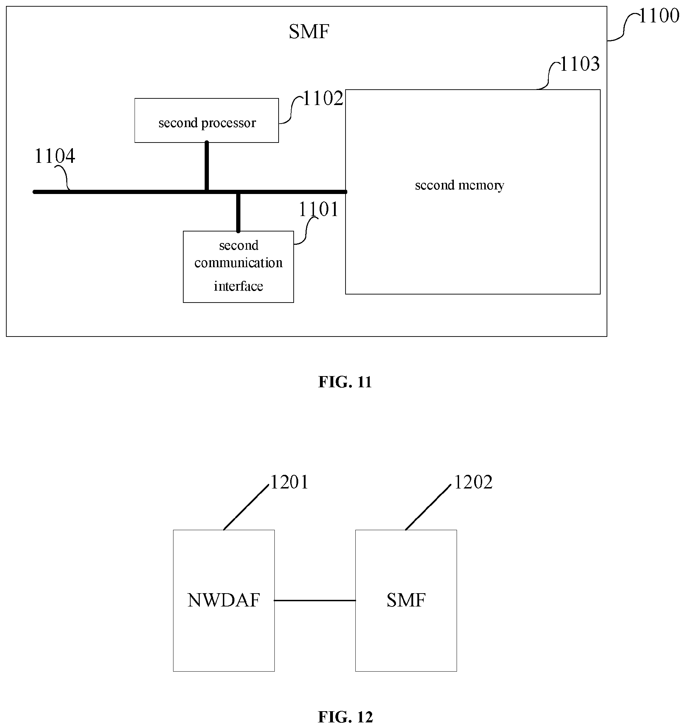

Based on the hardware implementation of the program modules, in order to implement the above-mentioned information transmission method at an SMF side, the present disclosure further provides in some embodiments an SMF. As shown in FIG. 11, the SMF 1100 includes: a second communication interface 1101 configured to perform information interaction with another network function (e.g., an NWDAF, an AMF or a UPF); a second processor 1102 coupled to the second communication interface 1101 to perform information interaction with the other network function, and configured to execute a computer program to implement the information transmission method at an SMF side provided in one or more technical solutions; and a second memory 1103 configured to store therein the computer program.

To be specific, the second communication interface 1101 is configured to, in a case that a first condition is met, receive first information sent by an NWDAF, the first condition represents that the SMF 1100 serves at least one terminal in a first terminal list for the NWDAF, the first terminal list includes at least one terminal located within an AOI, and the first information is used to subscribe for user plane information about one or more terminals located within the AOI.

Alternatively, the second communication interface 1101 is configured to, in a case that a second condition is met, receive second information sent by an NWDAF, the second condition represents that the SMF 1100 serves at least one terminal in a second terminal list for the NWDAF, the second terminal list includes at least one terminal located within an AOI, and the second information is used to subscribe for user plane information about one or more terminals located within the AOI.

Alternatively, the second communication interface 1101 is configured to, in a case that a third condition is met, receive third information sent by an NWDAF, the third condition represents that the SMF 1100 serves a first DNN and/or a first network slice, and the third information is used to subscribe for user plane information about one or more terminals within an AOI.

Alternatively, the second communication interface 1101 is configured to, in a case that a fourth condition is met, receive fourth information sent by an NWDAF, the fourth information represents that the SMF serves an AOI, and the fourth information is used to subscribe for user plane information about one or more terminals located within the AOI.

In an embodiment of the present disclosure, in a case that the third information has been received, the second communication interface 1101 is further configured to: subscribe to an AMF for one or more terminals located within the AOI to obtain the first terminal list, the first terminal list including at least one terminal located within the AOI; and send sixth information to a UPF meeting a fifth condition, the fifth condition representing that the UPF serves at least one terminal in the first terminal list, and the sixth information being used to subscribe for user plane information about the one or more terminals located within the AOI.

In a case that the third information has been received, the second communication interface 1101 is further configured to subscribe to an AMF for the one or more terminals located within the AOI to obtain the first terminal list, and the first terminal list includes at least one terminal located within the AOI. The second processor 1102 is configured to determine a fifth terminal list, the fifth terminal list includes at least one terminal located within the AOI, and the fifth terminal list is obtained or determined according to the first terminal list. The second communication interface 1101 is further configured to send seventh information to a UPF meeting a sixth condition, the sixth condition represents that the UPF serves at least one terminal in the fifth terminal list, and the seventh information is used to subscribe for user plane information about the one or more terminals located within the AOI.

In an embodiment of the present disclosure, the third information at least includes a third terminal list, and the third terminal list includes at least one terminal about which user plane information needs to be subscribed. The second processor 1102 is further configured to: obtain a sixth terminal list, the sixth terminal list including at least one terminal served by the SMF; and compare terminals included in the third terminal list, terminals included in the sixth terminal list, and terminals included in the first terminal list, to determine the fifth terminal list.

In an embodiment of the present disclosure, the second communication interface 1101 is further configured to: send eighth information to the AMF, the eighth information being used to subscribe for an event indicating a terminal moving into or out of the AOI; and receive a fourth terminal list sent by the AMF, the fourth terminal list including at least one terminal moving into or out of the AOI. Correspondingly, the second processor 1102 is further configured to update the first terminal list with the fourth terminal list, and/or update the fifth terminal list with the fourth terminal list.

In an embodiment of the present disclosure, in a case that the fourth information has been received, the second communication interface 1101 is further configured to: subscribe to an AMF for the one or more terminals located within the AOI to obtain a first terminal list, the first terminal list including at least one terminal located within the AOI; for each terminal included in the first terminal list, in a case that the SMF 1100, as an intermediate-SMF, serves the terminal, send ninth information to an anchor-SMF of the terminal so that the anchor-SMF of the terminal subscribes to an anchor-UPF of the terminal for user plane information about the terminal, the ninth information being used to subscribe for user plane information about the terminal located within the AOI; and in a case that the SMF 1100, as not an intermediate-SMF, serves the terminal, send tenth information to a UPF serving the terminal, the tenth information being used to subscribe for user plane information about the terminal located within the AOI.

In an embodiment of the present disclosure, in a case that the fourth information has been received, the second communication interface 1101 is further configured to subscribe to an AMF for the one or more terminals located within the AOI to obtain a first terminal list, and the first terminal list includes at least one terminal located within the AOI. The second processor 1102 is further configured to determine a seventh terminal list, the seventh terminal list includes at least one terminal located within the AOI, and the seventh terminal list is obtained or determined according to the first terminal list. The second communication interface 1101 is further configured to: for each terminal included in the seventh terminal list, in a case that the SMF 1100, as an intermediate-SMF, serves the terminal, send eleventh information to an anchor-SMF of the terminal, such that the anchor-SMF of the terminal subscribes to an anchor-UPF of the terminal for user plane information about the terminal, the eleventh information being used to subscribe for user plane information about the terminal located within the AOI; and in a case that the SMF 1100, as not an intermediate-SMF, serves the terminal, send twelfth information to a UPF serving the terminal, the twelfth information being used to subscribe for user plane information about the terminal located within the AOI.

In an embodiment of the present disclosure, the fourth information at least includes a third terminal list, and the third terminal list includes at least one terminal about which user plane information needs to be subscribed. The second processor 1102 is further configured to: obtain an eighth terminal list, the eighth terminal list including at least one terminal served by the SMF 1100; and compare terminals included in the third terminal list, terminals included in the eighth terminal list, and terminals included in the first terminal list, to determine the seventh terminal list.

In an embodiment of the present disclosure, the second communication interface 1101 is further configured to: send thirteenth information to the AMF, the thirteenth information being used to subscribe an event indicating that a terminal moves into or out of the AOI; and receive a fourth terminal list sent by the AMF, the fourth terminal list including at least one terminal moving into or out of the AOI. Correspondingly, the second processor 1102 is further configured to update the first terminal list with the fourth terminal list, and/or update the seventh terminal list with the fourth terminal list.

In an embodiment of the present disclosure, the first information at least includes a ninth terminal list, and the ninth terminal list includes at least one terminal in the first terminal list served by the SMF 1100. In a case that the first information has been received, the second communication interface 1101 is further configured to send fourteenth information to a UPF meeting a seventh condition, the seventh condition represents that the UPF serves at least one terminal in the ninth terminal list, and the fourteenth information is used to subscribe for user plane information about the one or more terminals located within the AOI.

In an embodiment of the present disclosure, the second information at least includes a tenth terminal list, and the tenth terminal list includes at least one terminal in the second terminal list served by the SMF 1100. In a case that the second information has been received, the second communication interface 1101 is further configured to send fifteenth information to a UPF meeting an eighth condition, the eighth condition represents that the UPF serves at least one terminal in the tenth terminal list, and the fifteenth information is used to subscribe for user plane information about the one or more terminals located within the AOI.

It should be appreciated that, specific processing procedures of the second communication interface 1101 and the second processor 1102 may refer to those in the above-mentioned information transmission method, and thus will not be further detailed herein.

Of course, in actual use, components of the SMF 1100 are coupled to each other via a bus system 1104. It should be appreciated that, the bus system 1104 is configured to achieve connection and communication among these components. Apart from a data bus, the bus system 1104 may further include a power source bus, a control bus and a state signal bus. For clarification, all these buses in FIG. 11 may be collectively called as bus system 1104.

In the embodiments of the present disclosure, the second memory 1103 stores therein various types of data to support an operation of the SMF 1100, and examples of the data include any computer program operated on the SMF 1100.

The above-mentioned information transmission method may be applied to, or implemented by, the second processor 1102. The second processor 1102 may be an integrated circuit (IC) having a signal processing capability. During the implementation, the steps of the above-mentioned information transmission method may be completed through an integrated logic circuit of hardware in the second processor 1102 or instructions in the form of software. The second processor 1102 may be a general-purpose processor, a DSP, or any other programmable logic element, a discrete gate or transistor logic element, or a discrete hardware assembly, which may be used to implement or execute the methods, steps or logic diagrams in the embodiments of the present disclosure. The general purpose processor may be a microprocessor or any other conventional processor. The steps of the method in the embodiments of the present disclosure may be directly implemented by the processor in the form of hardware, or a combination of hardware and software modules in the processor. The software module may be located in a storage medium, and the storage medium may be located in the second memory 1103. The second processor 1102 may read information stored in the second memory 1103 so as to implement the steps of the method in conjunction with the hardware.

Illustratively, the SMF 1100 may be implemented by one or more of ASIC, DSP, PLD, CPLD, FPGA, general-purpose processor, controller, MCU, microprocessor, or any other electronic element, so as to implement the above-mentioned information transmission method.

It should be appreciated that, the memory (the first memory 1003 or the second memory 1103) in the embodiments of the present disclosure may be a volatile memory, a nonvolatile memory or both. The nonvolatile memory may be a Read-Only Memory (ROM), a Programmable ROM (PROM), an Erasable PROM (EPROM), an electrically EPROM (EEPROM), a flash memory, a magnetic surface memory, an optical disk, or a Compact Disc Read-Only Memory (CD-ROM). The magnetic surface memory may be a magnetic disk memory or a magnetic tape memory. The volatile memory may be a Random Access Memory (RAM) which serves as an external high-speed cache. Illustratively but nonrestrictively, the RAM may include Static RAM (SRAM), Synchronous SRAM (SSRAM), Dynamic RAM (DRAM), Synchronous DRAM (SDRAM), Double Data Rate SDRAM (DDRSDRAM), Enhanced SDRAM (ESDRAM), Synchronous Link DRAM (SLDRAM) or Direct Rambus RAM (DRRAM). The memory described in the embodiments of the present disclosure intends to include, but not limited to, the above-mentioned and any other appropriate memories.

In order to achieve the above-mentioned information transmission methods, the present disclosure further provides in some embodiments an information transmission system. As shown in FIG. 12, the information transmission system includes an NWDAF 1201 and an SMF 1202.

Here, it should be appreciated that, specific processing procedures of the NWDAF 1201 and the SMF 1202 have been described hereinabove, and thus will not be further detailed herein

The present disclosure further provides in some embodiments a storage medium, i.e., a computer storage medium, especially a computer-readable storage medium. For example, the storage medium includes the first memory 1003 storing therein a computer program, and the computer program is executed by the first processor 1002 of the NWDAF 1000 to implement the information transmission method at an NWDAF side. For another example, the storage medium includes the second memory 1103 storing therein a computer program, and the computer program is executed by the second processor 1102 of the SMF 1100 to implement the information transmission method at an SMF side. The computer-readable storage medium may be FRAM, ROM, PROM, EPROM, EEPROM, flash memory, magnetic surface memory, optical disk, or CD-ROM.

It should be appreciated that, such words as "first" and "second" are merely used to differentiate similar objects from each other, rather than to represent any specific order.

In addition, in a case of no conflict, the technical solutions in the embodiments of the present disclosure may be combined randomly.

The above are merely the preferred embodiments of the present disclosure, but shall not be construed as limiting the scope of the present disclosure.

## Claims

1. An information transmission method, performed by a Network Data Analytics Function NWDAF, the information transmission method comprising:
subscribing to an Access and Mobility Management Function AMF for a terminal(s) located within an Area Of Interest AOI to obtain a first terminal list, the first terminal list comprising at least one terminal located within the AOI; and sending first information to a Session Management Function SMF meeting a first condition, the first condition representing that the SMF serves at least one terminal in the first terminal list, and the first information being used to subscribe for user plane information about one or more terminals located within the AOI; or
subscribing to an AMF for a terminal(s) located within an AOI to obtain a first terminal list, the first terminal list comprising at least one terminal located within the AOI; determining a second terminal list, the second terminal list comprising at least one terminal located within the AOI, and the second terminal list being obtained or determined according to the first terminal list; and sending second information to an SMF meeting a second condition, the second condition representing that the SMF serves at least one terminal in the second terminal list, and the second information being used to subscribe for user plane information about one or more terminals located within the AOI; or
sending third information to an SMF meeting a third condition, the third condition representing that the SMF serves a first Data Network Name DNN and/or a first network slice, and the third information being used to subscribe for user plane information about one or more terminals located within an AOI; or
sending fourth information to an SMF meeting a fourth condition, the fourth condition representing that the SMF serves an AOI, and the fourth information being used to subscribe for user plane information about one or more terminals located within the AOI.

2. The information transmission method according to claim 1, wherein the determining the second terminal list comprises:
obtaining a third terminal list, the third terminal list comprising at least one terminal about which user plane information needs to be subscribed; and
comparing terminals comprised in the third terminal list with terminals comprised in the first terminal list to determine the second terminal list.

3. The information transmission method according to claim 1, further comprising:
sending fifth information to the AMF, the fifth information being used to subscribe for an event indicating that a terminal moves into or out of the AOI;
receiving a fourth terminal list sent by the AMF, the fourth terminal list comprising at least one terminal moving into or out of the AOI; and
updating the first terminal list with the fourth terminal list, and/or updating the second terminal list with the fourth terminal list.

4. An information transmission method, performed by an SMF, the information transmission method comprising:
in a case that a first condition is met, receiving first information sent by an NWDAF, the first condition representing that the SMF serves at least one terminal in a first terminal list for the NWDAF, the first terminal list comprising at least one terminal located within an AOI, and the first information being used to subscribe for user plane information about one or more terminals located within the AOI; or
in a case that a second condition is met, receiving second information sent by an NWDAF, the second condition representing that the SMF serves at least one terminal in a second terminal list for the NWDAF, the second terminal list comprising at least one terminal located within an AOI, and the second information being used to subscribe for user plane information about one or more terminals located within the AOI; or
in a case that a third condition is met, receiving third information sent by an NWDAF, the third condition representing that the SMF serves a first DNN and/or a first network slice, and the third information being used to subscribe for user plane information about one or more terminals within an AOI; or
in a case that a fourth condition is met, receiving fourth information sent by an NWDAF, the fourth information representing that the SMF serves an AOI, and the fourth information being used to subscribe for user plane information about one or more terminals located within the AOI.

5. The information transmission method according to claim 4, wherein in a case that the third information has been received, the information transmission method further comprises:
subscribing to an AMF for one or more terminals located within the AOI to obtain the first terminal list, the first terminal list comprising at least one terminal located within the AOI, and sending sixth information to a User Plane Function UPF meeting a fifth condition, the fifth condition representing that the UPF serves at least one terminal in the first terminal list, and the sixth information being used to subscribe for user plane information about the one or more terminals located within the AOI; or
subscribing to an AMF for the one or more terminals located within the AOI to obtain the first terminal list, the first terminal list comprising at least one terminal located within the AOI; determining a fifth terminal list, the fifth terminal list comprising at least one terminal located within the AOI, the fifth terminal list being obtained or determined according to the first terminal list; and sending seventh information to a UPF meeting a sixth condition, the sixth condition representing that the UPF serves at least one terminal in the fifth terminal list, and the seventh information being used to subscribe user plane information about the one or more terminals located within the AOI.

6. The information transmission method according to claim 5, wherein the third information at least comprises a third terminal list, and the third terminal list comprises at least one terminal about which user plane information needs to be subscribed,
wherein the determining the fifth terminal list comprises:
obtaining a sixth terminal list, the sixth terminal list comprising at least one terminal served by the SMF; and
comparing terminals comprised in the third terminal list, terminals comprised in the sixth terminal list, and terminals comprised in the first terminal list, to determine the fifth terminal list.

7. The information transmission method according to claim 5, further comprising:
sending eighth information to the AMF, the eighth information being used to subscribe for an event indicating a terminal moving into or out of the AOI;
receiving a fourth terminal list sent by the AMF, the fourth terminal list comprising at least one terminal moving into or out of the AOI; and
updating the first terminal list with the fourth terminal list, and/or updating the fifth terminal list with the fourth terminal list.

8. The information transmission method according to claim 4, wherein in a case that the fourth information has been received, the information transmission method further comprises:
subscribing to an AMF for the one or more terminals located within the AOI to obtain a first terminal list, the first terminal list comprising at least one terminal located within the AOI; for each terminal comprised in the first terminal list, in a case that the SMF, as an intermediate-SMF, serves the terminal, sending ninth information to an anchor-SMF of the terminal so that the anchor-SMF of the terminal subscribes to an anchor-UPF of the terminal for user plane information about the terminal, the ninth information being used to subscribe for user plane information about the terminal located within the AOI; and in a case that the SMF, as not an intermediate-SMF, serves the terminal, sending tenth information to a UPF serving the terminal, the tenth information being used to subscribe for user plane information about the terminal located within the AOI; or
subscribing to an AMF for the one or more terminals located within the AOI to obtain a first terminal list, the first terminal list comprising at least one terminal located within the AOI; determining a seventh terminal list, the seventh terminal list comprising at least one terminal located within the AOI, and the seventh terminal list being obtained or determined according to the first terminal list; for each terminal comprised in the seventh terminal list, in a case that the SMF, as an intermediate-SMF, serves the terminal, sending eleventh information to an anchor-SMF of the terminal, such that the anchor-SMF of the terminal subscribes to an anchor-UPF of the terminal for user plane information about the terminal, the eleventh information being used to subscribe for user plane information about the terminal located within the AOI; and in a case that the SMF, as not an intermediate-SMF, serves the terminal, sending twelfth information to a UPF serving the terminal, the twelfth information being used to subscribe for user plane information about the terminal located within the AOI.

9. The information transmission method according to claim 8, wherein the fourth information at least comprises a third terminal list, and the third terminal list comprises at least one terminal about which user plane information needs to be subscribed,
wherein the determining the seventh terminal list comprises:
obtaining an eighth terminal list, the eighth terminal list comprising at least one terminal served by the SMF; and
comparing terminals comprised in the third terminal list, terminals comprised in the eighth terminal list, and terminals comprised in the first terminal list, to determine the seventh terminal list.

10. The information transmission method according to claim 8, further comprising:
sending thirteenth information to the AMF, the thirteenth information being used to subscribe an event indicating that a terminal moves into or out of the AOI;
receiving a fourth terminal list sent by the AMF, the fourth terminal list comprising at least one terminal moving into or out of the AOI; and
updating the first terminal list with the fourth terminal list, and/or updating the seventh terminal list with the fourth terminal list.

11. The information transmission method according to claim 4, wherein the first information at least comprises a ninth terminal list, and the ninth terminal list comprises at least one terminal in the first terminal list served by the SMF,
wherein in a case that the first information has been received, the information transmission method further comprises:
sending fourteenth information to a UPF meeting a seventh condition, the seventh condition representing that the UPF serves at least one terminal in the ninth terminal list, and the fourteenth information being used to subscribe for user plane information about the one or more terminals located within the AOI.

12. The information transmission method according to claim 4, wherein the second information at least comprises a tenth terminal list, and the tenth terminal list comprises at least one terminal in the second terminal list served by the SMF,
wherein in a case that the second information has been received, the information transmission method further comprises:
sending fifteenth information to a UPF meeting an eighth condition, the eighth condition representing that the UPF serves at least one terminal in the tenth terminal list, and the fifteenth information being used to subscribe for user plane information about the one or more terminals located within the AOI.

13. An information transmission apparatus, comprising a first communication unit and a first processing unit, wherein
the first communication unit is configured to subscribe to an AMF for a terminal(s) located within an AOI to obtain a first terminal list, the first terminal list comprising at least one terminal located within the AOI; and send first information to an SMF meeting a first condition, the first condition representing that the SMF serves at least one terminal in the first terminal list, and the first information being used to subscribe for user plane information about one or more terminals located within the AOI; or
the first communication unit is configured to subscribe to an AMF for a terminal(s) located within an AOI to obtain a first terminal list, the first terminal list comprising at least one terminal located within the AOI; the first processing unit is configured to determine a second terminal list, the second terminal list comprising at least one terminal located within the AOI, and the second terminal list being obtained or determined according to the first terminal list; and the first communication unit is further configured to send second information to an SMF meeting a second condition, the second condition representing that the SMF serves at least one terminal in the second terminal list, and the second information being used to subscribe for user plane information about one or more terminals located within the AOI; or
the first communication unit is configured to send third information to an SMF meeting a third condition, the third condition representing that the SMF serves a first DNN and/or a first network slice, and the third information being used to subscribe for user plane information about one or more terminals located within an AOI; or
the first communication unit is configured to send fourth information to an SMF meeting a fourth condition, the fourth condition representing that the SMF serves an AOI, and the fourth information being used to subscribe for user plane information about one or more terminals located within the AOI.

14. An information transmission apparatus, comprising a second communication unit, wherein
the second communication unit is configured to, in a case that a first condition is met, receive first information sent by an NWDAF, the first condition representing that the SMF serves at least one terminal in a first terminal list for the NWDAF, the first terminal list comprising at least one terminal located within an AOI, and the first information being used to subscribe for user plane information about one or more terminals located within the AOI; or
the second communication unit is configured to, in a case that a second condition is met, receive second information sent by an NWDAF, the second condition representing that the SMF serves at least one terminal in a second terminal list for the NWDAF, the second terminal list comprising at least one terminal located within an AOI, and the second information being used to subscribe for user plane information about one or more terminals located within the AOI; or
the second communication unit is configured to, in a case that a third condition is met, receive third information sent by an NWDAF, the third condition representing that the SMF serves a first DNN and/or a first network slice, and the third information being used to subscribe for user plane information about one or more terminals within an AOI; or
the second communication unit is configured to, in a case that a fourth condition is met, receive fourth information sent by an NWDAF, the fourth information representing that the SMF serves an AOI, and the fourth information being used to subscribe for user plane information about one or more terminals located within the AOI.

15. An NWDAF, comprising a first communication interface and a first processor, wherein
the first communication interface is configured to subscribe to an AMF for a terminal located within an AOI to obtain a first terminal list, the first terminal list comprising at least one terminal located within the AOI; and send first information to an SMF meeting a first condition, the first condition representing that the SMF serves at least one terminal in the first terminal list, and the first information being used to subscribe for user plane information about one or more terminals located within the AOI; or
the first communication interface is configured to subscribe to an AMF for a terminal located within an AOI to obtain a first terminal list, the first terminal list comprising at least one terminal located within the AOI; the first processor is configured to determine a second terminal list, the second terminal list comprising at least one terminal located within the AOI, and the second terminal list being obtained or determined according to the first terminal list; and the first communication interface is further configured to send second information to an SMF meeting a second condition, the second condition representing that the SMF serves at least one terminal in the second terminal list, and the second information being used to subscribe for user plane information about one or more terminals located within the AOI; or
the first communication interface is configured to send third information to an SMF meeting a third condition, the third condition representing that the SMF serves a first DNN and/or a first network slice, and the third information being used to subscribe for user plane information about one or more terminals located within an AOI; or
the first communication interface is configured to send fourth information to an SMF meeting a fourth condition, the fourth condition representing that the SMF serves an AOI, and the fourth information being used to subscribe for user plane information about one or more terminals located within the AOI.

16. An SMF, comprising a second communication interface and a second processor, wherein
the second communication interface is configured to, in a case that a first condition is met, receive first information sent by an NWDAF, the first condition representing that the SMF serves at least one terminal in a first terminal list for the NWDAF, the first terminal list comprising at least one terminal located within an AOI, and the first information being used to subscribe for user plane information about one or more terminals located within the AOI; or
the second communication interface is configured to, in a case that a second condition is met, receive second information sent by an NWDAF, the second condition representing that the SMF serves at least one terminal in a second terminal list for the NWDAF, the second terminal list comprising at least one terminal located within an AOI, and the second information being used to subscribe for user plane information about one or more terminals located within the AOI; or
the second communication interface is configured to, in a case that a third condition is met, receive third information sent by an NWDAF, the third condition representing that the SMF serves a first DNN and/or a first network slice, and the third information being used to subscribe for user plane information about one or more terminals within an AOI; or
the second communication interface is configured to, in a case that a fourth condition is met, receive fourth information sent by an NWDAF, the fourth information representing that the SMF serves an AOI, and the fourth information being used to subscribe for user plane information about one or more terminals located within the AOI.

17. An NWDAF, comprising a first processor and a first memory storing therein a computer program executed by the first processor, wherein the first processor executes the computer program to implement the information transmission method according to any one of claims 1 to 3.

18. An SMF, comprising a second processor and a second memory storing therein a computer program executed by the second processor, wherein the second processor executes the computer program to implement the information transmission method according to any one of claims 4 to 12.

19. A storage medium storing therein a computer program, wherein the computer program is executed by a processor to implement the information transmission method according to any one of claims 1 to 3, or implement the information transmission method according to any one of claims 4 to 12.
